(19) Europäisches Patentamt
European Patent Office
Office européen des brevets

(11) **EP 4 177 665 A2**

(12) **EUROPEAN PATENT APPLICATION**
published in accordance with Art. 153(4) EPC

(43) Date of publication:
**10.05.2023 Bulletin 2023/19**

(21) Application number: **20953511.1**

(22) Date of filing: **10.10.2020**

(51) International Patent Classification (IPC):
***G02B 27/00*** *(2006.01)*

(86) International application number:
**PCT/CN2020/000237**

(87) International publication number:
**WO 2022/056650 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2020 CN 202010976670**

(71) Applicant: **Zhang, Chenghui
Kunming, Yunnan 650021 (CN)**

(72) Inventor: **Zhang, Chenghui
Kunming, Yunnan 650021 (CN)**

(74) Representative: **MERH-IP Matias Erny Reichl
Hoffmann
Patentanwälte PartG mbB
Paul-Heyse-Strasse 29
80336 München (DE)**

(54) **ADAPTIVE MIRROR FOR SUNLIGHT AND SIGNALS**

(57) Disclosed is an adaptive mirror for sunlight and signals. The present disclosure relates to convergence, divergence, correction, compensation and imaging technologies of rays (including sunlight, particle beams) and waves (including electromagnetic waves, mechanical waves), and in particular relates to a reflector or a refractor with converging, diverging, correcting, compensating and imaging functions and a design and manufacturing method thereof, and further relates to supporting application apparatuses thereof. Due to the adoption of the technical solution of directly drawing the curves for the mirror surface for the result, the cost performance of the product is greatly improved, and the product may be used in many fields, such as the fields of solar photothermal and photovoltaic, optical (such as telescopes, cameras, lighting, etc.) or acoustic (microphones, loudspeakers, etc.) devices, instruments (range finders, etc.), equipment (lithography machines, cutters, etc.), radars, sonars, the fields of laser and microwave, medical X-rays, ultrasound equipment, communication, and nuclear (experiment) test instruments and equipment.

EP 4 177 665 A2

**Description**

**TECHNICAL FIELD**

The present disclosure relates to converging, diverging, correcting, compensating and imaging technologies of rays (including sunlight, particle beams) and waves (including electromagnetic waves, mechanical waves), and in particular relates to a reflector or refractor with converging, diverging, correcting, compensating and imaging functions, as well as a design and manufacturing method therefor, and further relates to supporting application apparatuses thereof.

**BACKGROUND**

Imaging and non-imaging reflectors and refractors are widely used in solar concentration as well as signal transmission and collection. There are spherical mirrors, parabolic mirrors, elliptical mirrors, hyperbolic mirrors (which have rotating surfaces or grooved surfaces), cylindrical mirrors, and combinations thereof in the prior art. In the aspect of solar concentration, there are combined technologies of a compound parabolic concentrator (CPC) free of electromechanical tracking and several types of disclosed parabolic mirrors (including groove-shaped mirrors), spherical mirrors (including cylindrical mirrors) and other reflectors and refractors for tracking-free solar concentration.

The reflector or refractor in the prior art, such as a rotating parabolic reflector, may focus the light parallel to the optical axis thereof to one point (the focal point), but when the angle of the parallel light changes, the convergence point of the light may deviate and produce a comet aberration. Therefore, a precision electrochemical tracking controller is provided when the solar concentration is required, the precision electromechanical tracking controller is high in cost, as is the spherical lens (including aspheric mirrors in the prior art), and precision electromechanical trackers are prone to damage when used outdoors. If a combination of a plurality of condenser lenses is used, the light concentration is good when the incident light is parallel to the optical axis, but it is poor in other cases, and the light concentration fluctuates greatly (it is difficult to make a big change even if it is adjusted and corrected); and multiple reflections and refractions lead to greater light loss and higher device cost. However, when the compound parabolic concentrator (CPC) and other apparatus are used for light concentration, the receiving angle is small and the concentration ratio is not too high. In addition, the reflector or refractor for imaging has the problems of spherical aberration, aberration and the like. For the use of aspheric precision lens in the prior art, the design calculation is complex, and the processing is difficult, especially for the lens with large aperture. Moreover, when used for signal receiving, the focusing mirror in the prior art is small in receiving angle, and the signal is easy to lose.

Solar energy is a clean and renewable energy source. In the prior art, the electromechanical control tracker is needed when adopting the solar energy concentrating technology with higher multiple. Without light concentration or at low power concentration, the working medium for photothermal power generation is low in temperature and thus is low in efficiency. For photovoltaic power generation, if tracking technology is not used, the utilization rate of the expensive photovoltaic devices is lower. The manufacturing cost of these products and the maintenance cost when the electromechanical control tracker is existent are relatively high, and the economy is not ideal. The technology and market have the demands of further reducing the cost (including less land use) and improving the reliability. High-performance tracking-free light concentration technology is one of the breakthroughs.

**SUMMARY**

To solve these problems in the prior art, a calculation, design and manufacturing method is provided according to the concept of the present disclosure to obtain structural shape parameters of these reflectors and refractors different from those in the prior art and greatly improve the technical performance of these reflectors and refractors, thus obtaining unprecedented functions and positive and beneficial effects. It is expected that the solar tracking-free concentration device may give consideration to the followings: simple equipment, low cost, large receiving angle, and high concentration power. The design and processing technology of precision lenses and lenses with special requirements can be simplified, the cost can be reduced, and the performance can be improved. For the design and manufacturing of the lens with correcting, compensating, focusing, diverging and imaging functions, these lenses are often used for signal transmission, receiving, acquisition and imaging. To this end, the present disclosure provides the following technical solutions: a series of reflector and refractor products with targeted technical performance which can adapt to various technical conditions and technical requirements, as well as related technologies thereof. An 'adaptive mirror' ('adaptive reflector', 'adaptive refractor') is a product obtained by using the design and manufacturing method of the present disclosure and having structural shape parameters different from those in the prior art, which is the name of the reflector or refractor with particular performance of the present disclosure, and is an agreement of the present disclosure. It is also agreed in the patent application materials that the relevant points, curves and curved surfaces that consist the 'adaptive mirror' technology are called 'adaptive points' and 'adaptive curves', and 'adaptive curved surfaces'. (Note: in the examples of all reflectors in the present disclosure, the theoretical values of the relative refraction coefficients of materials are all 1.498. Actually, all refracting materials can be used for the refractors proposed in the present disclosure.)

So far, the patent application provides such an inventive concept to obtain an 'adaptive curve' (and then obtain an 'adaptive mirror') by using the following method. The methods, principle, mathematical formulas and geometrical optical drawing thereof are explained in detail. These three aspects technically describe, clarify, define, verify and obtain the technical parameters, technical performance and effects of the 'adaptive curve', 'adaptive curved surface' and 'adaptive mirror', as well as specific technical features. The expressions are as follows:

1. Method and principle are as follows: a plurality of representative lines are selected from a light beam (a wave beam) with clear technical parameters, and are required to reach the agreed technical target after being reflected or refracted. The curve obtained by connecting reflection points or refraction points with curves conforming to the technical requirements (normal lines of these points are also clear) is called 'adaptive curve' here; (the more and denser the 'representative line', the closer the 'adaptive curve' to the technical limit of the 'adaptive curve', where the technical limit is an ideal value, the product can constantly approach but cannot reach the technical limit, and can only be close to ideal). When these reflection points or refraction points are determined and connected, the following technical processing must be conducted: an angle bisector of an included angle between two normal lines of adjacent points is obtained (in order to obtain the angle bisector mathematically, the fixed normal line can be fixed, the moving normal line is connected to the fixed normal line, and then the angle bisector of these two normal lines can be obtained), and the bisector line is from the determined point to another point, and the other point should be on both the bisector line and the corresponding reflection line or refraction line, so the other point can be determined. An isosceles triangle can be formed by the connecting lines between the adjacent reflection points or refraction points and the intersection of the normal lines of these two points; these two adjacent points are connected by an arc line with the normal line intersection (the vertex of the isosceles triangle) as the center, thus achieving smooth connection. This is because these adjacent arcs drawn by using the method are tangent. A groove-shaped 'adaptive curved surface' can be obtained by translating the 'adaptive curves', a disc-shaped 'adaptive curved surface' can be obtained by rotating the 'adaptive curves', and these 'adaptive curved surfaces' are used as mirror surfaces (if the mirror is a reflector, another surface also needs to be determined, which may be a spherical surface, a plane, an 'adaptive curved surface' and other curved surfaces), then an 'adaptive mirror' is made. These 'adaptive mirrors' can also be subjected to multi-lens combination to meet various technical requirements. To this end, the technical features of the 'adaptive mirror' may be determined in this way: the "representative line" of the light beam (wave beam) is required to reach the agreed technical target after being reflected or refracted; in particular, it is necessary to draw a circle with the intersection of normal lines of adj acent reflection points or refraction points as the center of the circle. These adjacent points can be on the same circle "pairwise", and the curved surface obtained by translating or rotating the curves obtained by connecting the above arcs drawn by using the technical attributes of these reflection points or refraction points is used as the reflector or refractor of the mirror surface, and its 'Fresnel mode' is also included (it is equivalent that a plurality of mirrors are in parallel to complete the same technical task). In general, three steps are required to obtain these specific 'adaptive mirrors' in the present disclosure: (1) determining specific known and set data of the technical elements; (2) a, calculating related data by mainly using formulas and equations provided in the present disclosure, and obtaining the curve by using a connection method provided in the present disclosure, and then obtaining the corresponding curved surface; b, obtaining the curve by mainly using a drawing method (block diagram) provided in the present disclosure, and then obtaining the corresponding curved surface; c. combining the steps a and b to obtain the curve and the corresponding curve; and (3) others: such as materials and manufacturing process, and cautions.

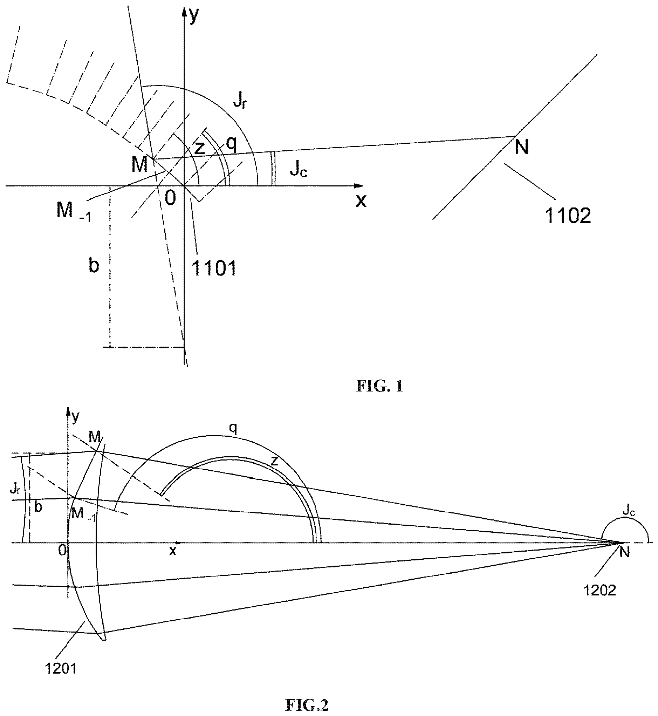

2. To accurately obtain the coordinates of these ('adaptive') reflection points or refraction points as well as inclination angles of the normal lines passing through these points, the following mathematical formulas (formulas, equations (sets) and functions, elements and characters of which are as shown in FIG. 1, FIG. 2 and other related figures in the accompanying drawings) are particularly provided and are obtained by calculation. (This is an analytical method, and it may also be a geometric method).

The general equation set here is an equation set (1):

$$\begin{cases} y = k_r x + b \\ y - y_{m-1} = k_f(x - x_{m-1}) \\ y - y_n = k_c(x - x_n) \end{cases} \qquad \text{equation set (1)}$$

Note: the equation $y=k_r x+b$ is used for a case that the incident light is 'parallel light' (or close to 'parallel light'), if the incident light is 'point light' (the coordinates are $x_r$, $y_r$), the equation is $y-y_r=k_r(x-x_r)$
Where:

$$k_r = \tan j_r \ldots \text{formula (1)}$$

$$k_f = \tan(90° + z/2 + q/2) \ldots \text{formula (2)}$$

$$k_c = \tan(2z - j_r) \ldots \text{formula (3)}$$

$$j_c = z + arcn_d \sin(j_r - z) \ldots \text{formula (4)}$$

(which is used for replacing $(2z-j_r)$ in formula (3) during fraction)

Related formulas of $k_r$, $k_f$ and $k_c$ above are substituted into the equation set (1), as $j_r$ and $q$ are generally known numbers, there is a ternary equation set with unknown numbers of x, y and z. The ternary equation set is solved, where the solutions of x, y and z are the coordinates of the 'adaptive point' and the inclination angle of the normal line passing through the point.

It is set that the normal line inclination angle of the 'current adaptive point 'M is z. For the convenience of description and clear memory, the point M in the figure is called ' the current adaptive point' and point $M_{-1}$ is called 'before adaptive point', and $z = j_r/2 + j_c/2$ (reflection case) is obtained, $j_r$ and $j_c$ are inclination angles of incident line and emergent line, respectively, $k_c$ is the slope of the emergent line represented by the function of z, and q is an inclination angle of the 'before adaptive point' (calculated before and known currently). Based on the detailed specific embodiments of the present disclosure, the reflection line and the refraction line are collectively referred to output lines. The normal line inclination angle is obtained according to a refraction formula in a case of refraction, and the normal line inclination angle is obtained by using the following calculation formula (5) in a case of refraction:

When the curves of the adaptive refractor are drawn and calculated, the included angle between the normal line of each point and the incident line is obtained through the following formula (5).

$$a = arcsin \sqrt{\frac{n_d^2 sin^2 b}{(n_d conb - 1)^2 + n_d^2 sin^2 b}} \qquad \text{formula (5)}$$

($n_d$ is the relative refractive index of the material; b is an included angle between the incident line and the refraction line, b is an acute angle; $0 \le a < 90°$).

Linear equation with only one unknown of z is obtained through mathematical processing (the formulas (1)(2)(3) need to be substituted):

$$(y_{m-1} - k_f x_{m-1} + k_r x_0 - y_0)/(k_r - k_f) = (k_r x_0 + y_n - y_0 - k_c x_n)/(k_r - k_c) \ldots \text{equation} \quad (1)$$

(this formula is obtained from the equation set (1) by an elimination method and a substitution method, and the equation set (1) is solved step by step from here.)

The equation is solved to obtain a value of z, i.e., the inclination angle of the normal line of the 'adaptive point'. The value of z is substituted into the equation set (1) to obtain a binary equation set, the binary equation set is solved to obtain the values of (x, y), i.e., the coordinates of the 'adaptive point'. The intersection of the normal lines passing through two 'adjacent adaptive points' is the center of circle of the arc connecting the two points, and the distances from the center of circle to the two points are equal according to the mathematical relationship of the equation set (1). As the normal line passing through each 'adaptive point' is unique, these connections are smooth.

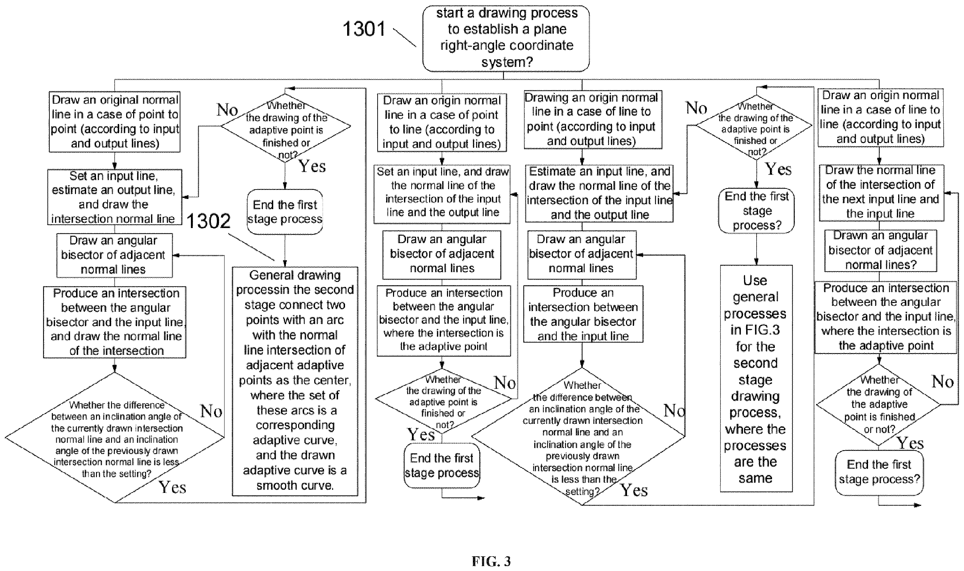

3. The design method of the present disclosure refers to perform calculation and design by using the mathematical formulas above to obtain a variety of adaptive mirrors suitable for various technical conditions, so as to meet the needs of various products, apparatuses, equipment, production and life. For example, the adaptive curve can also be obtained by using an optical geometric drawing method. The geometric drawing method and flows are as shown in FIG. 3.

A groove-shaped (cylindrical) adaptive curved surface can be obtained by translating the adaptive curve. The adaptive curve is rotated with the main optical axis as the core to obtain a rotary adaptive curved surface. The adaptive curved surface is drawn in the three-dimensional space coordinates system according to the method concept of the present disclosure, and a free adaptive curved surface may also be obtained. A plurality of adaptive curved mirrors may be used to complete one task.

An aspheric mirror (and a mold thereof) for imaging in the prior art has complex processing equipment and technology and high manufacturing cost. The imaging 'adaptive mirror' can basically employ spherical mirror processing equipment and technology, and the manufacturing of such 'adaptive mirror' or mold and its processing technology and procedures are relatively simple. The 'adaptive mirrors' may also be made into a correction lens, and may also be combined into multiple lenses. Apparently, the adaptive mirror may be used in telescopes, microscopes, cameras, video cameras, lithography machines, cutting machines, welding equipment, transmitting devices, receiving antennas, including mirrors therein, such as: a corrector for a laser beam, and imaging of mask under pure parallel light. For the application, eight series of products obtained by using the design and manufacturing method are listed: 1. solar compound 'adaptive curve' reflecting condenser; 2. solar 'adaptive curve' reflecting compensating mirror; 3. extended application apparatuses of the previous two 'adaptive mirrors'; 4. laser correction, 'point'-focusing 'adaptive mirror'; 5. variable-beam 'adaptive mirror' (expanding, shrinking); 6. laser mask refracting 'adaptive mirror', X-ray mask reflecting 'half-sided' 'adaptive mirror'; 7. 'point' to 'point' imaging 'adaptive mirror'; 8. multi-focal gradient (glasses) 'adaptive mirror', afocal (real, virtual) (high beam anti-glare light) 'adaptive mirror'; 9. radiation source 'shift' 'adaptive mirror'. See the specific embodiments of the present disclosure (embodiment 1 to embodiment 8) for details.

In this way, the mathematical (geometric) figures of the 'adaptive mirror' and its related data can be obtained. These data are required for processing and manufacturing the 'adaptive mirror' products. Meanwhile, these figures and related data clearly describe and express the structures and shapes of these 'adaptive mirrors', and are also the main basis for analyzing the effectiveness thereof. Therefore, a considerable space in the present disclosure describes how to obtain these figures and data thereof, describe structures and shapes thereof, analyze the effect and put forward the uses, which are the core of the concept of the present disclosure.

The manufacturing method and technology of the product of the present disclosure are described in detail below:

1. A mirror grinding technology that requires the precision adaptive mirrors (or molds thereof): blank-'milling'-fine grinding-polishing.
2. For the rotary 'adaptive mirror', the related procedures (e.g., milling) refers to that a workpiece rotates around its own central axis (the central optical axis), a grinding tool rotates at a high speed and uses the center of circle of the arc connecting the 'adaptive points' as a revolving center to move between the two 'adaptive points'; the revolving center can be changed to the center of circle of the next arc when the grinding tool swings to the corresponding 'adaptive point'. The operation requires precision, and it is better to use CNC machine tools.
3. For the groove-shaped adaptive mirror, the workpiece is generally in translation movement.
4. The small-aperture 'adaptive mirror' or the 'adaptive mirror' with low precision requirements can be manufactured by injection molding or die pressing, and the mold thereof can also be manufactured by the method of the present disclosure.

The material used by the 'adaptive mirror' is as follows: (1) a refractor, which may use various refraction materials. (2) A reflector, which may use various reflecting materials, or may be obtained by plating a reflecting film and pasting a reflecting film on the component (made of non-reflecting materials).

The design method of the present disclosure may achieve the calculation of various structural parameters through an electronic computer program, and the known technical data, flows and technical requirements are input into a computer to calculate the coordinates of all 'adaptive points', the inclination angles of the normal lines passing through these 'adaptive points', as well as the coordinates of the center of circle of the arc for connecting two adjacent 'adaptive points'. These data are input into the CNC machine tool to automatically calculate the manufacturing. These geometric figures may also be completed by using computer drawing software, and effect analysis and verification may also be achieved by using computer simulation technology.

The specific 'adaptive mirror' products of the present disclosure are obtained by the design method and manufacturing method of the present disclosure (the same concept) according to various technical requirements under corresponding technical conditions, and the main inventive products are described in detail in the specific embodiments of the present disclosure (embodiment 1 to embodiment 8).

The present disclosure has the following outstanding features:

The manufacturing of these curved surfaces (or molds thereof) basically follows the manufacturing tools and equipment of spherical mirrors, with only the technology change, which is simple and easy to implement, and is relatively easy to obtain products with precise functions. The manufacturing may further refer the specific embodiments of the present disclosure.

The adaptive mirror defined, drawn and manufactured by the technical parameters of the present disclosure has its own unique structural shape parameters, its mirror surface (one surface with the least reflector) is apparently different from the spherical surface, the ellipsoid, the paraboloid and double curved surface used in the prior art. The following new technical performance and effects are produced: strong pertinence and good adaptability; large receiving angle and strong convergence ability; good imaging quality, high pixel and wide application; and simpler and more feasible processing technology. The objective of the present disclosure is achieved in various specific embodiments, and more specific beneficial effects of the present disclosure are reflected in the specific embodiments one by one.

In general, there is at least one 'adaptive mirror' in each specific embodiment of the present disclosure. (In some cases where there is no adaptive mirror, the extended or expanded innovation may still exert its excellent performance, and is also within the scope of protection of the present disclosure.)

The technical features of the present disclosure may be used for convergence, imaging, correction, divergence and compensation. The structural shape of the reflecting surface of the reflector and the outline structural shape of at least one surface of the refractor are obtained by translating the curve or rotating the curve with the central axis as the center. The curve is determined by mathematical expressions (a formula (1), a formula (2), a formula (3), a formula (4), a formula (5), an equation (1) and an equation set (1)) or corresponding optical geometric drawing (block diagram of FIG. 3), the coordinates and normal lines of specific points are determined, and the two adjacent points are connected by an arc with the intersection of normal lines of two adjacent points as the center. A smooth curve is obtained by gathering these arcs, the referred combination apparatus has at least one of reflectors or refractors. The technology and products are used in the fields of solar photothermal and photovoltaic, optical (such as telescope, camera, lighting, etc.) or acoustic (microphone, etc.) devices, instruments, and equipment (lithography machine), radars, sonars, the fields of laser and microwave, medical X-rays, ultrasound equipment, and nuclear (experiment) test instruments and equipment, thus improving the cost performance of the existing products or obtaining the products not in the prior art.

The design and manufacturing method of a reflector (or a mold) or a refractor (or a mold) is as follows: the design method is that the technical structural shape parameters of the curve used by the reflector or refractor are defined by mathematical expressions (a formula (1), a formula (2), a formula (3), a formula (4), a formula (5) and an equation (1) as well as an equation set (1)) or corresponding optical geometric drawing (block diagram of FIG. 3), the coordinates and normal lines of numerous points are progressively determined point by point, and then the two adjacent points are connected by an arc with the intersection of the normal lines of the two adjacent points as the center of the circle. These arcs are gathered to obtain a smooth curve, the smooth curve is translated to obtain the groove-shaped curved surface, or the curve is rotated with the central axis as the center to obtain a dish-shaped curved surface (convex or concave). The known (input representative line) parameters and the set (output representative line) parameters have strong pertinence to the application, and the obtained curve (surface) is completely designed for the application and is accurate. The used manufacturing method is that a workpiece on a machine tool rotates around its own central axis, and a cutter (grinding head) also rotates around its own central axis, and the cutter (grinding head) swings forward at the same time. When the center of swing moves to the next point according to the grinding point, the center of swing turns to the center the connecting arc of the point and its own next point and continues to swing to the last point of such processing, and the processing is completed. If possible, the processing can be started from a connecting arc with the largest radius.

## BRIEF DESCRIPTION OF THE DRAWINGS

FIG. 1 illustrates a drawing demonstration diagram of an 'adaptive curve' in a case of reflection, in the figure: 'adaptive curve' (1101), linear target (1102).

FIG. 2 illustrates a drawing demonstration diagram of an 'adaptive curve' in a case of refraction, in the figure: 'adaptive curve' (1201), point target (1202).

FIG. 3 illustrates a flow block diagram of a geometric optical drawing method of an 'adaptive curve', in the figure, drawing start block (1301).

FIG. 4 illustrates a schematic diagram of a manufacturing process of a 'convex surface' of an 'adaptive mirror', in the figure, workpiece (1401), cutter (grinding) head (1402); central axis of workpiece (1403); central axis of cutter (grinding) head (1404); swing (movement) 1 center of cutter (grinding) head (1405); swing (movement) 1 center of cutter (grinding) head (1406); expected normal line on workpiece (1407).

FIG. 5 illustrates a schematic diagram of a manufacturing process of a 'concave surface' of an 'adaptive mirror', in the figure, workpiece (1501), cutter (grinding) head (1502); central axis of workpiece (1503); swing (movement) 1 center of cutter (grinding) head (1505); swing (movement) 1 center of cutter (grinding) head (1506); expected normal line on workpiece (1504).

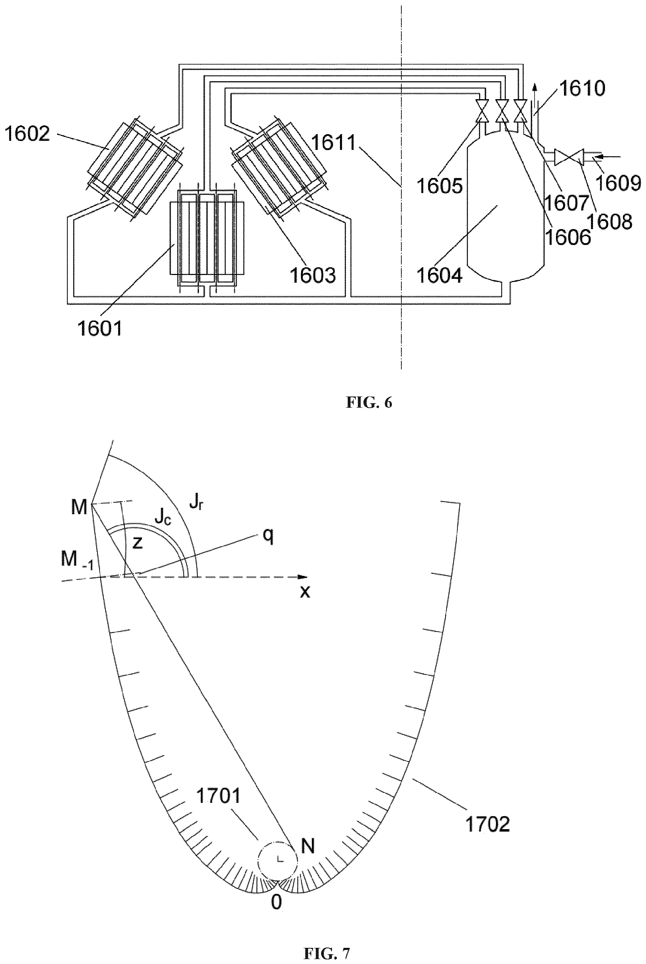

FIG. 6 illustrates a schematic diagram of a system in accordance with an embodiment 1, in the figure, the left side of a dot dash line (1511) is a partial top view (an 'adaptive' focusing mirror and a heat collector), the right side of the dot dash line is a partial side view (a steam pocket and other parts); photothermal assembly (1601), photothermal assembly (1602), photothermal assembly (1603), steam pocket (1604), electromagnetic valve (1605), electromagnetic valve (1606), electromagnetic valve (1607), electromagnetic valve (1608), liquid working medium inlet pipe (1609), vapor working medium outlet pipe (1610), view demarcation line (1611).

FIG. 7 illustrates a drawing demonstration diagram of a compound 'adaptive curve' in accordance with an embodiment 1, in the figure, compound 'adaptive curve' (1702), round tube heat collector (1701).

FIG. 8 illustrates a light concentration effect diagram of a compound 'adaptive curved surface' in accordance with an embodiment 1, and a structure diagram of a heat collector used in an embodiment 1, in the figure, vacuum tube heat collector with partition (1801), multi-tube heat collector (1802).

FIG. 9 illustrates a structure diagram of a heat storage device used in an embodiment 1, heat storage tank (1901), heat-carrying medium pipeline (1902), latent heat substance (1903), sensible heat substance (1904), heat-carrying medium inlet pipe (1905), heat-carrying medium outlet pipe (1906), heat storage pool (1907).

FIG. 10 illustrates a drawing demonstration diagram of an 'adaptive curve' for compensation in accordance with an embodiment 2, in the figure, adaptive curve (2001), solar cell (2002).

FIG. 11 illustrates an effect diagram of an 'adaptive curved surface' mirror for compensation in accordance with an embodiment 2, in the figure, 'adaptive curved surface' compensating mirror (2101), solar cell (2101), solar cell (2103).

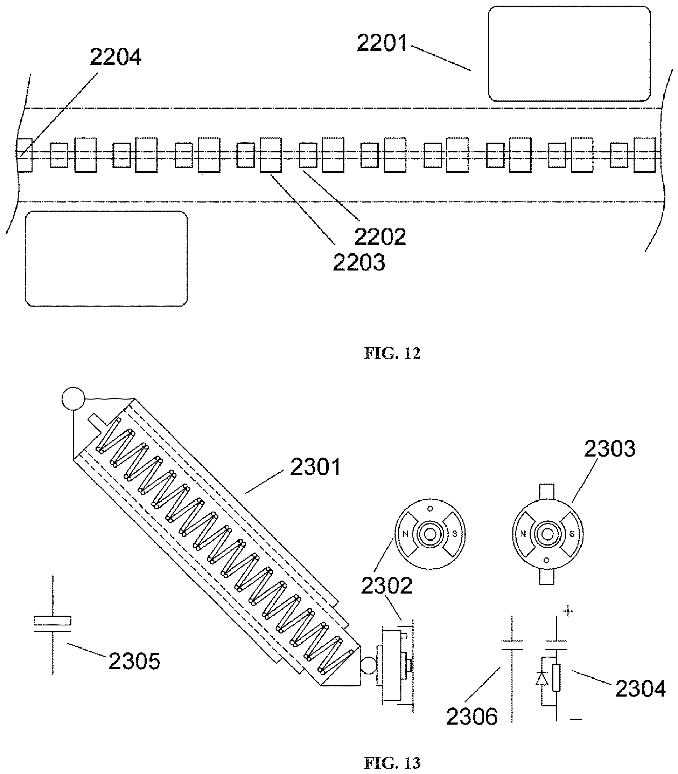

FIG. 12 illustrates a plane diagram of a system in accordance with an embodiment 3, in the figure, solar photothermal power generation plant (2201), solar cell panel (2202), 'adaptive curved surface' compensating mirror (2203), highway (green) isolation belt (2204).

FIG. 13 illustrates a structure diagram of an (electromechanical) connecting arm and a connector in accordance with an embodiment 3, in the figure, (electromechanical) connecting arm (2301), electrochemical interface with telescopic protective cover on arm (2302), on-board electrochemical interface (2303), direct current arc extinguishing circuit (2304), alternating current arc extinguishing circuit (2306), super capacitor (2305).

FIG. 14 is a schematic diagram of a structure of a mobile charging apparatus in accordance with an embodiment 3, in the figure, (power supply rail) contact slide rail (2401), (power supply rail) contact slide rail (2411), (traveling) collector wheel (2402), collector shoe (2403), (electromechanical) connecting arm (2404), (recovery wheel) rope winder (2405), universal joint (2406), universal joint (2407), (electricity switching) collector trolley (2408), (lower hollow) support (2409) for rail installation (bearing), cable protective casing (2412).

FIG. 15 illustrates a design diagram (with effect diagram) of a structural shape of an 'adaptive' refractor for high-precision collimation in accordance with an embodiment 4.

FIG. 16 illustrates a design diagram (with effect diagram) of a structural shape of an 'adaptive' refractor for high-precision focusing in accordance with an embodiment 4.

FIG. 17 illustrates a design diagram of a structural shape of a two-mirror type 'adaptive' refractor for beam expansion in accordance with an embodiment 5.

FIG. 18 illustrates a design diagram of a structural shape of a one-mirror type 'adaptive' refractor for beam expansion in accordance with an embodiment 5.

FIG. 19 illustrates a design diagram of a structural shape of a high-precision 'adaptive refractor' for a lithography machine in accordance with an embodiment 6.

FIG. 20 illustrates a design diagram of a structural shape of an 'adaptive reflector' for a lithography machine in accordance with an embodiment 6.

FIG. 21 illustrates a design diagram of a structural shape of an 'adaptive reflector' for a large telescope in accordance with an embodiment 7, in the figure, lower half part of primary (main) adaptive reflector for effect display (3101), upper half part of the (primary) main adaptive reflector for drawing demonstration (3105), (secondary) auxiliary 'adaptive reflector' (3102), (45°-installed) surface reflecting plane mirror (3103), non-central region aberration correction 'adaptive refractor' (3104).

FIG. 22 illustrates a design diagram of a structural shape of an 'adaptive refractor' for a camera in accordance with an embodiment 7, in the figure, high-definition, high-resolution, long-focal-length and periscopic 'adaptive refraction' single mirror (3201).

## DETAILED DESCRIPTION OF THE EMBODIMENTS

### Embodiment 1

Embodiment 1 is the application of a compound 'adaptive curve' reflector designed and manufactured in accordance with the concept of the present disclosure on the solar concentration photothermal apparatus (the main reason for using the word 'compound' here is that many uses thereof are the same as those of a compound parabolic concentrator (CPC) in the prior art, for example, the adaptive curve reflector can also be used for collecting and receiving rays and particles):

In the prior art, the solar-concentrating medium and high temperature photothermal apparatus is provided with an electromechanical tracking apparatus. The embodiment 1 is a solar-concentrating medium and high temperature photothermal apparatus using the 'adaptive mirror', which, compared with the compound parabolic concentrator (CPC) in the prior art, has no electrochemical tracking device, but has a large receiving angle and large light concentration. The specific solution of the embodiment 1 of the present disclosure is as follows: a photothermal unit is composed of a 'compound adaptive mirror' photothermal assembly 1601, a 'compound adaptive mirror' photothermal assembly 1602 and a 'compound adaptive mirror' photothermal assembly 1602; the 'compound adaptive mirror' photothermal assembly is composed of 'compound adaptive mirror' photothermal elements; the 'compound adaptive mirror' photothermal element is formed by assembling a groove-shaped 'compound adaptive mirror' 170) and a performance-matched photothermal receiver 1701 thereof. All photothermal elements have the same structures and parameters but different installation positions and angles. The photothermal unit is further connected to adaptive pipelines (pipelines in FIG. 1), a steam pocket 1604, a heat storage pool 1907, and electromagnetic valves 1605, 1606 and 1607 for control to form a photothermal system. The system further includes an electromagnetic valve 1608 for control. The photothermal receiver may be provided with a photothermal isolator for improving actual concentration ratio, and may also employ a vacuum tube form with a selective coating. An 'adaptive compensating mirror' 2101 may be arranged in front of the 'compound adaptive mirror' photothermal assembly. The photothermal assembly 1601 faces due south, with an installation angle of the local latitude plus 10° to 15°, and the distance between the photothermal assembly and the front photothermal assembly is 2.5 to 3.5 times of the height. The included angle between the central axis of the east and west photothermal assemblies 1603 and 1602 and the photothermal assembly 1601 is 36° (the maximum half angle of lighting of the 'compound adaptive mirror' in FIG. 7 is 19°, and there is a comprehensive margin of 1° here), and the installation angle is the local latitude plus 25° to 35°, and the distance between the photothermal assembly and the front photothermal assembly is 2.5 to 3.5 times of the height.

In the embodiment 1, two types of 'adaptive mirrors' are used, where the 'compound adaptive mirror' and the performance-matched photothermal receiver form a photothermal element. The photothermal element may have different specific technical parameters according to the technical requirements of the embodiment 1, and a plurality of (variable number) photothermal elements form a photothermal assembly according to certain technical requirements, and a plurality of photothermal assemblies form a photothermal unit according to the design requirements. The 'adaptive compensating mirror' here is wider than the photothermal assembly, the excess widths at both ends are not less than the product of L and $\tan\theta$, L is the distance from the center of the photothermal assembly to the center of the 'compensating mirror', $\theta$ is the maximum half angle of lighting, and apparently, the wider the photothermal assemblies (arranged in parallel), the better the economy.

The technical parameters of a groove-shaped 'compound adaptive mirror' 1702 are respectively as follows: half angle of lighting $\theta$, concentration ratio C, height H/width b. The technical parameters of the tubular photothermal receiver are as follows: outer diameter r. The technical parameters of other parts are as follows: a partition coefficient of a photothermal isolator (i.e., internal partition number of photothermal receiver tubes); and the combined technical parameters of the apparatus are as follows: an included angle between the central axis of a tube core of the photothermal receiver and the ground, and an azimuth angle of the central axis of the tube core of photothermal receiver. It is agreed here that when the central axis of the tube core of the photothermal receiver is not parallel to the ground, the central axis points from low to high to define the azimuth angle.

These 'compound adaptive mirrors' are groove-shaped reflectors and are obtained by translating 'compound adaptive curves' 1702. The 'compound adaptive curve' 1702 is roughly similar to the curve of the compound parabolic concentrator (CPC), but if compared, it will be found that some of the main technical feature parameters are substantially different from those of the curve of the CPC. Certainly, it is also substantially different from other curves for designing mirrors in the prior art. The reason that the compound adaptive curve is different from other curves is that the curve 1702 is drawn by using the method and parameters of the present disclosure. Referring to FIG. 7, specific description and drawing are as follows:

The drawing of the 'compound adaptive curve' 1702 is as follows: 1, known conditions: an input line (including secondary and above reflected light) is sunlight, and an altitude angle and an azimuth angle are determined by the latitude and time of the place of use; parameters setting: an output line is tangent to the excircle of a solar tube receiver (the solar receiving surface in actual); the maximum angle of the input line (when the inclination angle is the smallest) is the maximum half angle of lighting; and when the input line and the output line coincide and have the maximum angle, the input line used for curve drawing may remain unchanged until the end of drawing. 2. The 'adaptive curve' 1702 is a symmetrical curve: the 1701 in FIG. 7 is an excircle of the solar tube receiver (the solar receiving surface in actual), and the curve 1702 is a smooth curve.

Referring to FIG. 7: according to the design method provided by the summary of the present disclosure, an origin of the right-angle coordinate system is placed at the lowest point of the excircle of the solar tube receiver, the coordinates and the normal line of each 'adaptive point' are solved by (the equation set 1 and the like or drawing a block diagram), adjacent 'adaptive points' are connected by an arc, and the intersection of the adjacent normal lines is the center of circle. As these three points are connected as an isosceles triangle, such arc connection is permissible, and the adjacent arcs are tangent to each another and are thus in smooth connection.

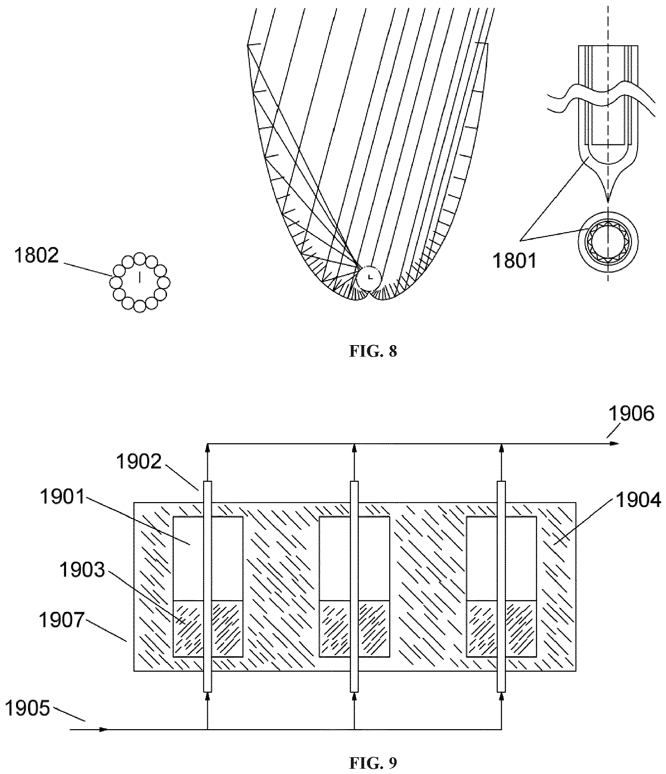

The light concentration effect of the compound 'adaptive mirror' is as shown in FIG. 8.

The embodiment 1 has the beneficial effects and outstanding characteristics as follows: when the half angle of lighting is 19°, it is actually measured in FIG. 8 that the comparative concentration ratio of the compound 'adaptive curve' 1702 is 2.91, which is 41% greater than the 2.07 of the compound parabolic concentrator (CPC). There is no need of an electrochemical control apparatus for tracking the sunlight, thus the economic cost (investment and management) is low. Compared with the disclosed tracking-free solar concentration technical solution, the concentrating apparatus is simpler, with a larger half angle of lighting, higher concentrating ratio, less reflecting materials and higher temperature of the heated medium (which is also related to the adoption of 'multi-tube' or 'separated' heat collectors). It can be used for solar photothermal power generation, and may also be used in air conditioning, refrigeration and medium heating.

A heat storage body is placed in the heat storage tank, the heat storage body is vacuum in an iron pipe, and liquid which can be evaporated and boiled is placed in the heat storage body. The heat of vaporization is as high as possible, and low-cost materials such as water are used. Other latent heat materials that do not produce gas (steam) can also be added to make the safety better, such as PE (polyethylene), PG (propylene glycol) mixed materials, mixed dissolved salts, hydroxides, metal hydrides, etc.

The outstanding characteristics of the heat storage part in the embodiment 1 are as follows: strong heat storage capacity, low cost and simple maintenance.

The 'compound mirror' in the apparatus in the embodiment 1 has structural shape parameters different from those in the prior art, and is called technical elements of the adaptive mirror in this case. The compound mirror further has a photothermal receiver, a pipeline, a heat storage tank, a control system and a combination thereof adaptive to the adaptive mirror, which can be simplified and replaced under the conditions of different technical requirements. As long as the technical features are totally or partially same as those in this case and new positive technical effects can be provided, the simplifications and replacements are within the scope of protection claimed in the patent application.

Except for the working reflecting surface and photothermal receiver of the 'compound adaptive mirror' and 'adaptive compensating mirror', other outer surfaces of the 'compound adaptive mirror' and the 'adaptive compensating mirror', as well as outer surfaces of all other apparatuses, and supports, etc. can be coated with diffuse reflection coatings with strong reflection ability to increase the light received by the apparatus and increase the light received by other surrounding objects, thus facilitating the complementary utilization of solar energy (such as photothermal photovoltaic complementary and biological complementary). To further improve the illumination on the plants below the photothermal apparatus, the reflecting materials or coatings of the compound adaptive mirror and the adaptive compensating mirror may be made of spectrally selective materials, such as materials which allow the transmission of green light and can reflect red light, infrared light and far infrared light.

The 'compound adaptive mirror' in the embodiment may also serve as a secondary condensing mirror to replace the secondary reflector of the compound parabolic concentrator (e.g., in a "Fresnel" reflector strip concentrating apparatus with a tracker), the 'compound adaptive mirror' has a larger half angle of lighting, higher concentration ratio and uses less reflecting materials.

The technical features of the embodiment 1 is that an input line for the design of the 'adaptive curve' is sunlight or a reflection line, an output line is a tangent of the excircle of the 'heat collector', and the heat collector is 'multi-tube' or 'separated' heat collector. The comparative concentration ratio of the compound 'adaptive mirror' is increased by 41%, and the temperature of the working medium is improved by the structure of the 'heat collector'.

## Embodiment 2

Embodiment 2 is application of an 'adaptive curve' compensating reflector designed and manufactured in accordance with the concept of the present disclosure on the solar photovoltaic power generation (or photothermal) apparatus.

In the prior art, in the past tracking-free photovoltaic power generation, the light intensity of the solar panel changes greatly during the position change of the sun in the sky in one year and one day, so the average power generation is only about half of the rated value, and the utilization rate of a grid-connected inverter is only about half. These two components are expensive. To change such situations, an adaptive mirror photovoltaic power generation apparatus using a compensation mode (e.g., distributed photovoltaic compensation) is provided in the embodiment. This mode of adaptive mirror can be used to compensate the illumination of photovoltaic cells, so the illumination obtained by the photovoltaic cells at each time is close to the rated value. When the light angle is fixed, the compensation uniformity can easily reach more than 99%, for example, it can be used for a two-dimensional electromechanical tracking solar photovoltaic cell system for sunlight concentration.

The adaptive curve compensating reflector is composed of a compensative 'adaptive mirror' 2101 and 'photovoltaic panels' 2102 and a grid-connected inverter or a charger.

The compensative adaptive mirror 2101 is as follows:

The embodiment is one of the 'adaptive mirrors', and an application thereof. As the structural parameters of the used compensative adaptive mirror 401 can satisfy the requirements of the solar photovoltaic assembly: the illumination is uniform, the total intensity is constant around the rated ideal value thereof, the average power generation by the photovoltaic solar panels and the grid-connected inverter with the same model parameters and capacity can is increased by 30%, and the effect is positive. If the double-sided photovoltaic panel is used, the back may also employ the adaptive reflector for compensation.

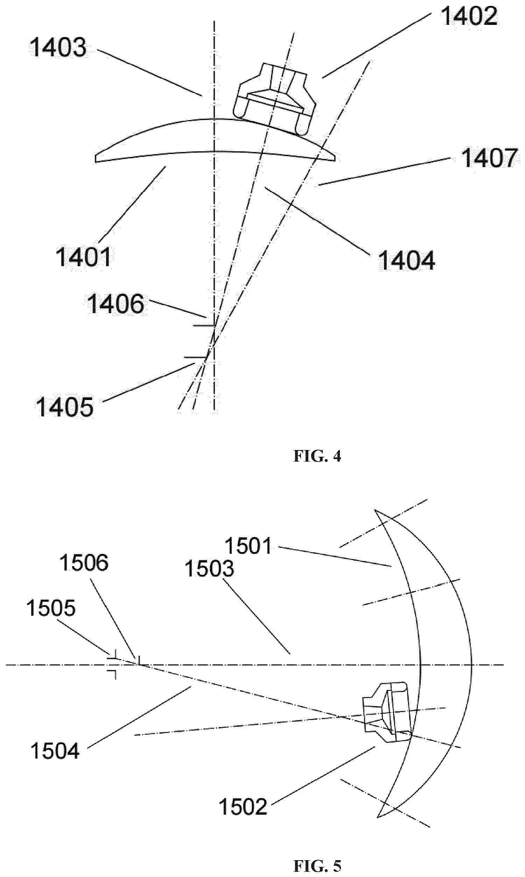

The specific data of the embodiment are as follows: 1, relevant technical data of the solar photovoltaic array to be compensated are as follows: the direction, angle and position of the solar panel, and the position and angle parameters of the adaptive mirror (as shown in FIG. 4), where the position is 25 degrees north latitude and faces due south, the installation inclination angle of the solar photovoltaic assembly is 45 degrees, and the distance between the front and rear solar photovoltaic assemblies is 3 times of the assembly height. 2. Drawing and installation of the mirror surface of the adaptive mirror (as shown in FIG. 5) are as follows: the installation size of the compensative adaptive mirror: the highest point is slightly lower than the highest position of the front photovoltaic assembly, and the distance therebetween is about 7.5% of the distance between the front and rear adjacent photovoltaic assemblies. 3. Analysis of the compensation effect (as shown in FIG. 6) is as follows: a compensation value at the noon of the summer solstice is about 30% plus illumination caused by reflection loss, the compensation value at the noon of the winter solstice is 10% plus illumination caused by reflection loss. In this way, the solar photovoltaic assembly can get about 100% illumination at noon all year round.

The drawing of the 'adaptive curve' is as follows:

(1) Presetting technical data: determining an origin of the right-angle coordinate systems as a start point of the drawing of the 'adaptive curve', where the input light is sunlight, and the output light is a point reflected to the solar cell (or assembly) by the 'adaptive mirror'; placing the point and lines in the right-angle coordinate system to obtain the corresponding point coordinates and straight slope; (2) clarifying the data of the incident line and the output line, the intermediate data and to-be-determined data; (3) compensating by 30% to 10% in the whole process, and taking the value according to the altitude angle of the sun at the noon; (4) obtaining corresponding adaptive curves, and then translating the adaptive curves to obtain a groove-shaped adaptive curved surface reflector, where the reflector may be made of reflecting materials, or may be obtained by pasting a reflecting film or plating a reflecting film on the mirror surface. The 'adaptive surface' is drawn according to the method provided by the summary of the present disclosure, and the drawing is specifically conducted as shown in FIG. 9: (1) known and set data: a photovoltaic panel 1902 has a length of 10,000 units (as the scale base of the whole figure), the installation inclination angle of the photovoltaic panel is 37.5°, the distance between the front and rear photovoltaic panels is 3 times of the installation height of the photovoltaic panel, and the photovoltaic panel faces south (due south), (this is commonly used installation data when the installation site is at 25° north latitude); at noon, the sun is above this latitude, and the change of the altitude angle of the sun within one year is 41.5° to 88.5°, which is set to be 35° to 90° (including design allowance, etc.), and other set values are as follows: according to the fact that direct sunlight is 100%, the compensation may reach 100% in the range of the set value of the solar altitude angle of 35° to 90°, and in consideration of the reflection loss, the compensation amount is increased by 5% of the above compensation amount, and the additional compensation value is increased by 5% of the direct sunlight throughout the whole process; the horizontal distance between the start point of the "adaptive mirror" and the lowest point of the compensated solar photovoltaic panel is 10,000 units, and the vertical distance is 0 unit; the start point position is an estimated value; after preliminary drawing, if the end point position exceeds the range, such as exceeding a connecting line between the highest point of the front cell panel and the lowest point of the rear cell panel, the end point position needs to be adjusted or possibly redrawn; (2) drawing starting: 90° incident light irradiates to the start point and is reflected to the lowest point of the solar cell panel, and an angular bisector of the incident line and the reflection line is the normal line of this point; and (3) therefore, a convex adaptive mirror product is obtained as a compensating mirror for solar photovoltaic cells, with an operating latitude of 25°-1° to +65°; the coordinates of the reflection points and the normal lines of these points can be obtained one by one by solving the equation set (1). Various elements and characters are calculated by referring to FIG. 9. As above, the normal line inclination angle of the 'current adaptive point' M is set as z, and the following is obtained: $k_f = tan(\pi/2 + q/2 + z/2)$, $z = j_r/2 + j_c/2$, where $j_r$ and $j_c$ are inclination angles of the incident line and the output line, and $k_c$ is the slope of the output line represented by the function of z, and the reflection line here is an output line.

The compensative 'adaptive mirror' is combined with a support to improve the wind resistance and disaster resistance of a photovoltaic array and reduce the cost; and the diffuse reflection coating is brushed on the back of the compensative 'adaptive mirror' and the support to facilitate the ecology of the ground and water surface.

The apparatus in the embodiment 2 has the following outstanding characteristics:

(1) There is no need of an electrochemical tracking system, the solar cells can basically obtain the uniform maximum illumination all day and all year round by means of cheap compensative 'adaptive mirror'. The system performs at its maximum efficiency.

(2) There is no need to increase the place of use additionally, and the illumination on the ground or water surface under the photovoltaic array of the apparatus basically has no dead angle, so the ecology is good.

(3) The 'adaptive mirror' used here is 'convex', with no light concentrating heat region and better safety.

(4) The compensative 'adaptive mirror' is combined with the support to improve the wind resistance and disaster resistance of photovoltaic array and reduce the cost; and the diffuse reflection coating is brushed on the back of the compensative 'adaptive mirror' and the support to facilitate the ecology of the ground and water surface.

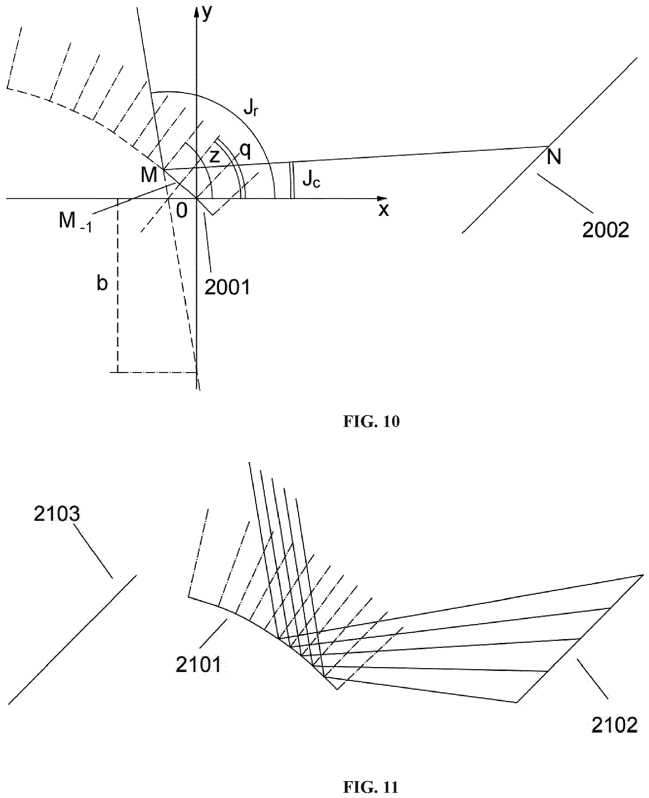

The effect is as shown in FIG. 11.

The design principle of the 'adaptive mirror' of the embodiment may also be used in a sunlight reflector satellite in geosynchronous orbit, and the 'adaptive mirror' is applied to its ground receiving apparatus. The reflector satellite is designed in this way: the satellite runs in the geosynchronous orbit, and is stationary relative to the ground apparatus. Such a satellite reflector is a double-sided reflector, with a rotation period of 0.5 r/day, (an included angle between the rotation axis and the plane of the earth's revolution orbit is half of the earth's rotation axis, and the two rotation axes are coplanar). The initial position angle of the mirror surface ensures that the sunlight is reflected on the apparatus, the double-sided reflector can be used to focus sunlight from two directions with 'concave' 'adaptive mirror' to reduce the ground spot. The adaptive mirror on the ground apparatus not only ensures that the natural incident sunlight can reach the receiving device normally, but also can converge the sunlight reflected from the satellite to reach the receiving device at a set magnification, and the two rotation axes should be parallel. The feature thereof is that the spot area may be one quarter of that of another reflector.

The operating principle of the 'adaptive mirror' may also be applied to the low-layer part of a multi-layer cultivation greenhouse for direct light supplementary. In addition, the operating principle thereof and the compensative 'adaptive mirror' may be directly used for the embodiment 1, making the actual light concentration more uniform and keeping the temperature of the working medium at a high value at each day of the season.

The technical features of the embodiment 2 are as follows: the input line used for the design is sunlight, the output line is a connecting line to a specific point on the solar cell panel. During drawing, the distance between the front and rear input lines determines the illumination compensation intensity, and the 'adaptive reflector' for compensation is convex.

Embodiment 3

Embodiment 3 is an extended application of embodiment 1 and embodiment 2, the combined application of these technologies makes the advantages thereof better play. The embodiment 3 comprises the solar photovoltaic photothermal power generation and energy storage technologies in embodiment 1 and embodiment 2, and further comprises the technology for charging an electric vehicle in traveling.

In the prior art, storage batteries for vehicles such as electric vehicles have the defects of long charging time and the like, affecting promoted application. The investment for wireless mobile charging investment is high. Rail vehicle can achieve mobile power supply, but an electric vehicle does not travel on a rail. A plurality of electric vehicle mobile charging solutions have been publicly available in this technical field, but they have not been popularized and applied.

The prior art (urban railways, trolleybuses, subways, electrified railways, high-speed railways, mobile power supply technology in factories, etc.) is used for reference; and these technical points and cautions as well as different beneficial measures are put forward according to these situations:

1. Two wires are used for power supply, and one wire needs to be reliably grounded for safety. It may be one wire on rail and one wire on line, or two wires on two lines, or two wires on two rails.

2. A high voltage (e.g., 1,500 V) may be employed to reduce the current passing therebetween.

3. In a case that there are two pantographs on an electric vehicle, the length of each pantograph needs to be smaller than a line distance between two power supply wires, thus guaranteeing enough safety clearance.

4. Two end heads of the pantograph are arc-shaped so as to reduce impact caused by abnormal transverse entering and exiting; and the end head of the power supply wire is also arc-shaped so as to reduce the impact caused by abnormal longitudinal entering and exiting. The position of the grounding wire needs to be guaranteed that the pantograph is advanced before the grounding wire is released.

5. An optical scanning or electric induction sensor is installed on the electric vehicle, and a state of the pantograph is determined using position relative signals given by the sensor: standby or contact. The pantograph is fully retracted when not in use.

6. A mode of contact first and then power-on, and power-off first and then disengagement is employed.

7. Compressed air enters the "pantograph rack" cylinder through large holes and micro holes, the compressed air entering through the large holes are configured to ensure that the pantograph rises timely, and the compressed air entering through micro holes are configured to keep the cylinder air pressure and ensure rapid deflation (by using additional air vent valves) when abnormal, thereby putting down the pantograph rapidly.

8. Materials and structures of the power supply line and the pantograph refer to existing rail electric vehicles, for example, the "wire" is made of titanium alloy with good conductivity and wear resistance, and the "pantograph" is made of a graphite sliding plate, when the graphite sliding plate is seriously abraded to the end point of the service life or is damaged or broken, the compressed air for supporting can rapidly escape to make and the pantograph rack be rapidly put down.

9. The trend of the line is "zigzag", it is guaranteed that the line slide in the middle of the graphite sliding plate in normal straight traveling, the sliding distance is one third of the length of the graphite sliding plate, and the rest two thirds are left for maneuvering.

10. A line traveling mark is arranged on the traveling line to guarantee that the power supply line slides in the middle of the graphite sliding plate of the pantograph during traveling. When an auto pilot is used, the sliding distance is increased to two thirds of the length of the graphite sliding plate, and the rest one third is left for maneuvering.

11. A way of mobile charging pile is as follows: there is a transversal ultra-thin trolley serving as a mobile charging pile is arranged on one side of the road, the trolley is hung on the rail and can walk on the rail, the trend of the contact net line is also "zigzag", and the pantograph is also used for power taking. A camera is installed at the entrance of this chargeable road so as to obtain information such as a license plate of a to-be-charged vehicle; and meters for charging and electricity consumption are installed on the trolley, and electricity consumption data is uploaded by the Internet. A female socket on a universal arm is connected to charged equipment (electric vehicle) in a manual or automatic manner. Another solution is that all mechanisms of the trolley are installed on a to-be-charged vehicle, when the to-be-charged vehicle is parked or in a traveling state, the trolley can be automatically hung on the rail to complete the charging process, or the trolley can be separated from the rail to be put away. The details are analyzed in the figures. The pantograph is a plastic insulated base plate with two graphite sliding plates arranged in a single line. Attention should be paid to the insulation gap, and the problem of short circuit caused by rainwater.

12. In order to solve the problem of imbalance of solar power generation, energy storage facilities can be used for storing and providing electric power. A heat and energy storage facility is provided here, which is provided with steel-container shaped heat storage units which are tightly arranged in a regular shape. The heat storage units are hollow, pure water is placed in the heat storage units to drain off other gases. Gravity energy storage apparatus can also be considered, and the medium thereof may employ the cheap stone besides water. This is an independent system requiring a standby storage battery, and the standby power supply may be replaced with the grid when available. Along the charging line, an 'adaptive mirror' and an anti-glare LED lamp are adopted to intelligently control illumination of charged vehicle, only a signal lamp needs to be turned on for vehicle on the charging line, and a distance between the front vehicle and the rear vehicle should be controlled.

13. The solar power supply system here is in 'line'-'surface' combination, the 'line' is that photovoltaic power generation (embodiment 2 in the present disclosure) is arranged on the charging line, and the 'surface' is that the photothermal power generation (embodiment 1 in the present disclosure) is arranged along a barren site, the surplus power can be connected to the grid, while the grid may also be used to charge in a case of power shortage. The characteristics are apparent.

Furthermore, the specific solution needs to give consideration to the followings:

The charging and power supply for the electric vehicle may be completed using a mobile charging and power supply module. The module runs on an aerial elastic nylon hollow monorail and is limited to the left and the right. Conductive cables are arranged on both sides of a monorail, the trend of the titanium alloy conductive cables is double zigzag, and a graphite nylon hollow pantograph is configured to supply power. The module and the charged vehicle are in pantograph arm flexible electromechanical connection, the compressed air and the tension of the pantograph force the pantograph arm to be opened to lift the pantograph up to work, and dragging and charging connection are both in the middle of the rear surface of the top of the vehicle. The compressed air is generated by a micro air pump, double loops are used for power supply, a steam pocket and a cylinder are connected by a micro pipeline, and the loss of pressure is caused when the graphite is broken or leaked. Force-limiting "fusing" separation is adopted in emergency, a "fuse protector" is made of a "foam sponge aluminum" material, the cable is rapidly taken back to guarantee that a rope head is soft and light to avoid new damage. The module walks in a passive and active manner. The module is dragged by a charged vehicle in the passive manner, a module walking motor generates electricity to return to the grid. Gating frequency conversion and current-limiting power supply are adopted in the active manner. Active and passive conversion is performed through asynchronous sliding. An intelligent network is provided for mobile billing. The distance between the modules during movement is intelligently controlled. An intelligent vehicle finding module is provided. The separation is divided into: normal automatic separation, laser positioning separation, mechanical limiting emergency separation, and recovery.

Such a mobile charging module (available in top arrangement and side arrangement) may be called a mobile charging pile, which travels on two lines formed by connecting steel pipes. One pipeline is used for bearing, and the other pipeline is used for limiting; the electric vehicle is electrically connected to the mobile charging module using a magnetic connector assembly to achieve the electric connection therebetween. The magnetism of the magnetic connector assembly is achieved by virtue of the current and can be controlled by the current. There are two walking manners for the mobile charging module: dragging by an electric vehicle and electric self-walking. The openness of a working arm is limited, and demagnetization and separation are performed after power failure. The tension of the working arm is limited, and the working arm can be rapidly folded and retracted to be stored after being separated. The working arm may be elongated and automatically retracts by means of a spring. The tightening and loosening of the traveling wheel and the limiting wheel are controlled by the angle of the working arm by means of a mechanical interlocking trigger. The pantograph leans against the power supply cable by means of compressed air and the spring, and the angle is limited. Certainly, when the facility is arranged at the top, the two rails are horizontally placed in parallel. Low-speed traveling charging may employ the contact slide rail. The above technical solutions are used for the condition that the traveling speed of the electric vehicle is high.

In general, the critical point of the technical solution of the mobile charging module is the important idea of the solution that a "pantograph and a collector shoe need to be installed on a carrier moving stably", where a moving apparatus on a rail is available. The carrier is required to properly press the rail to properly limit the left-right moving range. When the carrier is small in bounce, the power supply of either the conductive cable or the contact rail and the contact of the pantograph or the collector shoe in the moving process are well. Certainly, other technical measures such as an absorption circuit are also included, the technical solution of the present disclosure and the technical measures cooperatively guarantee the normal power supply and charging work of the electric vehicle.

To this end, by comparing, concentrating, integrating and improving above techniques, the specific technical solution of the mobile solar charging facility is proposed (the optimal solution of embodiment 3, which is used for an electric vehicle traveling at a speed below 160 km per hour):

The mobile power supply and charging of the electric vehicle traveling at a high speed can be achieved, with the specific facility and measures as follows: (1) The existing mobile power supply techniques, such as the related techniques of a high-speed rail and a subway, are used for reference. (2) Atechnical task is completed through the cooperation of (power supply rails) contact slide rails 2401 and 2411 and a (switching) 'collector trolley' 2408, and the technical solution of mobile power supply and charging is completed by using the contact rails 2401 and 2411, a collector shoe 2403, a (traveling) 'collector' wheel 2402, and an electromechanical connecting arm 2404. (3) A plurality of technical measures are used: One of the key techniques is that an electromechanical connecting arm 2404 is used for completing electrical and mechanical connection of the 'collector trolley' 2408 and an electric vehicle by using electromagnetism. Single-sided power supply is a weaker mechanical connection, which is used when parking; both sides supplying power simultaneously to form opposite magnetic poles is a stronger mechanical connection, which is used when an electric vehicle travels and drags(the collector trolley); both sides supplying power simultaneously to form like magnetic poles is provided for a situation needing separation; when the traction force exceeds the electromagnetic force, the collector trolley may be forcibly separated. The 'electromechanical connecting arm' is generally installed on the 'collector trolley' and is provided with an automatic retracting mechanism, such that the electromechanical connecting arm can automatically retract when separated from the electric vehicle. Electrical contacts are arranged at the connecting positions of the electric vehicle and the collector trolley. The electric connection is completed while the mechanical connection is made. The collector shoe and the 'collector wheel' of the same electrode may be connected in parallel to reduce the opportunity of electrical disconnection; and a current absorption arc extinction circuit is installed. An automatic searching and aligning apparatus for the 'electromechanical connecting arm' may also be installed (an autonomous and automatic electric driving traveling apparatus may also be installed on the switching 'collector' trolley) to achieve automatic connection. The electromechanical connecting arm is provided with a retraction spring mechanism and a recovery wheel rope winder with a clockwork spring. The two rear wheels may turn left and right to make the electric vehicle pass through a bend flexibly. The lower portions of the wheels incline outwards by 5° to 25° to achieve a certain limiting function. An energy storage super capacitor is installed to improve the stability of power supply of the system. An online automatic bill collector is installed to complete the deduction of electricity bills.

Such mobile charging facility can achieve the following technical effects: (1) the (switching) 'collector' trolley in the middle for transition can be made very light, due to the use of the weight of a charged vehicle, the 'collector wheel' and the collector shoe (which are kept at a proper pressing force by means of springs) can properly press conductive contact slide rails to guarantee their well contact and the passing of the current; while the charged vehicle is slightly lifted (the force is controlled by means of spring), so there is no increase in energy consumption. (2) The 'collector' trolley may stably travel on a smooth rail, due to a movable universal joint and the springs, the connection between the charged vehicle and the trolley enables the charged vehicle to have little effect on the trolley when bumping and swinging left and right, and thus the stability and reliability of the charging are guaranteed. (3) The trolley is connected to the charged vehicle by means of the electromechanical connecting arm, the electromechanical connecting arm is 'flexibly' connected to the trolley, and the mechanical connecting arm is connected to the charged vehicle by electromagnetic force, and an interface is provided at the tail of the charged vehicle. The 'electromechanical connecting arm' can automatically retract to snap into a safe position by means of the spring. In addition, the downward force bearing point of the trolley is located at its center, thus the control is easy, and the safety is achieved. (4) The two rear wheels may turn left and right to make the electric vehicle pass through the bend flexibly. The lower portions of the wheels incline outwards by 5° to 25° to achieve a certain limiting function. (5) A current absorption circuit is installed to reduce electric interference and mechanical wear. (6) An energy storage super-capacitor is installed to reduce the fluctuation of power supply.

The photovoltaic power generation with compensation is arranged above a charging line, which has little effect on the ground ecological illumination, and the support and the space are fully utilized. The photo-thermal power generation is arranged on the roadside, the wasteland is easy to find, the lines for charging are short and the losses are low.

The technical features of embodiment 3 are that the solar photovoltaic power generation facility is installed above the road, the solar photothermal power generation facility is installed along the roadside. The facility for powering and charging a traveling vehicle is powered by direct current or alternating current, and power is transmitted to the contact slide rail 2401 and the contact slide rail 2411; the line (rail) on the side easy to expose is grounded, and a support 2409 for bearing the contact slide rail and a non-ground rail (line) are well insulated. A (switching) 'collector' trolley 2408 provided with a (traveling) 'collector' wheel 2402 and a collector shoe 2403 of the facility travels on the contact slide rail 2401 and the contact slide rail 2411; and an electromechanical connecting arm 2404 capable of automatically retracting, keeping electrical and mechanical connection with a charging vehicle and provided with an electromagnetic force mechanism is arranged below the middle of the trolley 2408. The mechanical connection between the electromechanical connecting arm 2404 and the trolley 2408 is achieved using a universal joint (2406); the electromechanical connecting arm 2404 is provided with a retraction spring mechanism, a recovery wheel rope winder 2405 with a clockwork spring, and an interface 2402 for power supply and charging. The rail lines are arranged above both sides of the road; the point of force at which the trolley is pulled is at the center below the trolley, a total of four wheels in the front and rear of the trolley can turn left and right, with rotation angles limited to 15° and below with a limiting mechanism. The contact rail is in corresponding fit with the wheels at the bend, the lower portions of the wheels incline outwards 5° to 25°, and the rail inclines correspondingly; and therefore, the mobile solar power supply and charging facility for the electric automobile can be completed stably.

**Embodiment 4**

Embodiment 4 is the nearly-ideal processing of applying an 'adaptive refractor' designed and manufactured according to the concept of the present disclosure to the light, such as: (1) the laser beam is subjected to nearly-ideal parallel correction and collimation; and (2) the laser can be focused into a nearly-ideal point by one 'adaptive refractor'. The adaptive refractor may also be used for other similar scenes.

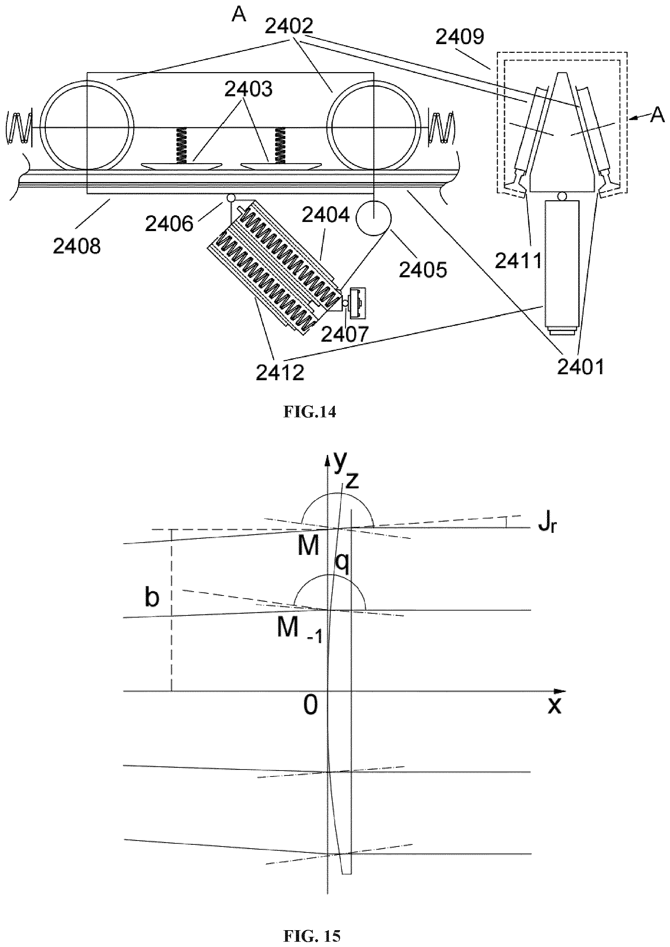

For the two types of adaptive refractors, the surface structural shapes thereof are designed as follows:
One mirror is that initial curves are used on both surfaces of the 'adaptive refractor' in a case of parallel correction and collimation, one initial curve employs a corresponding 'adaptive curve' segment (for an incident surface), the other initial curve is a straight line segment perpendicular to the central axis (used for the emergent surface, which rotates around the central axis to obtain a plane), where the 'adaptive curve' segment is drawn according to the design method of the 'Summary' of the present disclosure. Its known parameters are as follows: an input (representative) line at each position is light with its own specific slight inclination angle, and its set parameters are as follows: an output line is required to be a parallel line. Please referring to FIG. 15, the output line rotates by 180° around the central axis to obtain the refractor, the refractor may correct the light to be nearly-ideal parallel light. Here, the specific 'non-uniform' refractive coefficients of the material above of each 'adaptive point' can be used as correction parameters for calculation and drawing, and become the refractive coefficients for the specific calculation and drawing of the point; some 'non-uniform' situations of the refractive coefficients (e.g., the non-uniform refractive index from the center to the circumference of the refractor, such measures are available for all 'adaptive refractors' in the present disclosure to make the actual effect of the 'adaptive refractors' more ideal and the production cost lower).

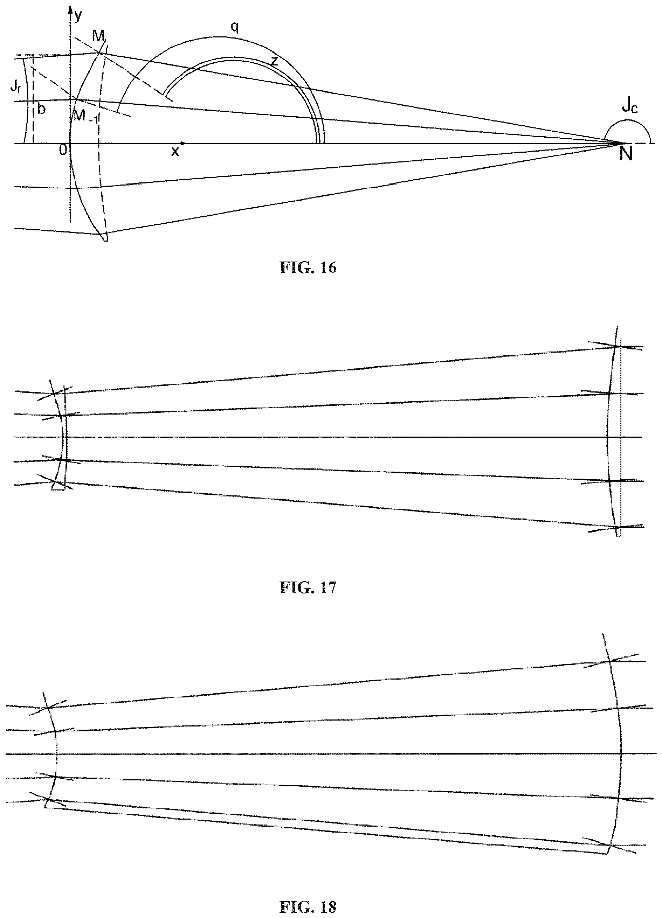

Another mirror is that initial curves are used on both surfaces of the 'adaptive refractor' in a case of focusing the light into the nearly-ideal point, one initial curve employs a corresponding 'adaptive curve' segment (for an incident surface), the other initial curve is an arc line segment taking the point N (referring to FIG. 16) as the center of circle (used for the emergent surface, wherein the radius of the arc line segment may be configured to adjust the thickness of the refractor as required, and the arc line segment rotates around its own axis to obtain a spherical surface), where the 'adaptive curve' segment is drawn according to the design method of the 'Summary' of the present disclosure. Its known parameters are as follows: an input (representative) line at each position is the light with its own specific slight inclination angle, and its set parameters are as follows: an output line is required to be accurately converged to the point N, please referring to FIG. 16. In accordance with the adaptive mirror for accurately focusing the light (e.g., laser, rays, and actually slightly divergent light beam) or waves (e.g., microwave, including sound wave and ultrasonic wave), the lenses with long focal length and super long focal length can be easily manufactured. It is also easy to manufacture an adaptive mirror capable of accurately refocusing the light (or wave) of a point source to one point (point-to-point for short, please referring to embodiment 7 for details). Therefore, under the same power, the light (or wave) not only can irradiate the workpiece or target at a short distance, but also can irradiate the workpiece or target at a long distance with high intensity.

In accordance with the 'adaptive mirror' technology, the lens with super-long focal length may be easily manufactured, if the refractor may be made to ultra-thin, the ultra-high power light (such as laser) and wave may not cause high temperature of the adaptive refractor. Certainly, this refractor should be made of a dielectric material with extremely high transparency to the light and wave, and it also requires a small temperature coefficient and a small deformation coefficient. Such adaptive mirror not only can focus the parallel high-power light and waves with great power at a close distance, but also can achieve the focusing with high power at a long distance. The super-long focal length lens can be very long because of its focal length. Although the power of high-power light may be greatly lost in the air, the farther the distance, the closer the distance to the focal point, and the higher the intensity. The long-focal-length adaptive refractor with large diameter may focus the beam which is not the ideal parallel light beam into a spot with a smaller diameter and higher intensity on the required distance. If the light beams of a plurality of laser devices with low power irradiate to the adaptive refractor, and are kept parallel to the optical axis of the adaptive refractor, these spots with smaller diameter and higher intensity may be superposed on the required distance to obtain the spot with higher power and higher intensity. The adaptive refractor may also be used for long-distance high-power transmission of microwave (or light wave), for example: (1) solar power generation in the space is transmitted to the ground by microwave; (2) when the solar energy is directly concentrated on the ground by the 'adaptive mirror' designed according to specific technical requirements, its spot is smaller; (3) dual-purpose laser equipment that irradiates a workpiece target at a long distance with high intensity to make the workpiece produce extremely high temperature at the spot and performs measurement at a long distance is provided. Apparently, if the incident (light) of the 'adaptive mirror' is parallel, it only needs to change the known parameters thereof, such as the input (representative) line (light), to parallel. These engineering technical tasks may be completed by designing the product using the calculation and drawing method of the 'Summary' of the present disclosure so as to obtain the 'adaptive mirrors' with somewhat different structural shapes. For the adaptive mirrors requiring the precision, as long as the step increment ($\Delta x$, $\Delta y$) of the adaptive point is small and close to zero, the lens performance may be particularly ideal, but the manufacturing difficulty may be increased. The effect analysis of the 'adaptive curved surface' refractor is as follows: the analysis is mainly developed around the imaging accuracy, as the design data that the light passing through the 'adaptive point' is refracted to a workpiece is straightforward, (for the rotary refractor, the non-uniform refractive index of the refracting materials scattered from the center to the circumference can be corrected). Theoretically, there is no error, and the error analysis mainly focuses on the part between the adjacent 'adaptive points'. Certainly, if the adjacent 'adaptive points' are very close, the error must be very small, but the manufacturing may be very difficult. Therefore, the distance between the adjacent 'adaptive points' needs to be controlled to make the maximum error between the two points not exceed the error required by the design. Such analysis is applicable to all types of 'adaptive mirrors'.

There is no fundamental difference in the design of the super-long focal length adaptive refractor (or reflector), except that the coordinate parameters of the point N 2602 (in FIG. 16) and the aperture ratio of the lens are changed, and the distance from the lens is large.

The 'adaptive mirror' and its supporting apparatus are accurately required in related size. To this end, the present disclosure provides equipment and method for inspection and verification. On a light target with a long distance from the ground (for example, 500 m), the spot size is directly measured at low power, and whether the verification meets the technical requirements is determined by using the high temperature generated by the spot at high power. As long as the step increment ($\Delta x$, $\Delta y$) of the 'adaptive point' is small and close to zero.

The effect analysis of the two types of 'adaptive curved surface' refractors is as shown in FIG. 15 or FIG. 16, respectively.

The two types of 'adaptive curved surface' refractors may be used for the followings: 1, parallel correction of the laser beam, e.g., the parallel correction of the laser beam of the lithography machine (if the beam needs to be expanded, the solution of embodiment 5 of the present disclosure may also be used). 2. Laser processing equipment is used for cutting, welding, punching and drawing lines on materials by correcting the laser beams in parallel and then focusing the parallel laser beams into a single point. 3. The laser (microwave) beams are focused at a distance, which is used to irradiate the distant workpiece and target with high intensity. 4. The laser (microwave) beam is nearly ideally focused, and the focal point is ignited with extremely high intensity and kept at extremely high temperature, such as for controllable nuclear fusion. 5. The 'adaptive curved surface' reflector or refractor can be used to correct, focus and image the light and microwave. When the signals from the source are not parallel, sometimes the 'adaptive mirror' should be designed according to the specific situation.

These products in the embodiment 4 have the outstanding characteristics as follows: (1) The 'adaptive refractor' can make the corrected parallel light close to ideal, and focus the laser into a nearly ideal point so as to obtain an excellent effect. (2) When the parallel light is output and the long focal length exists, the 'adaptive refractor' can be made thinner. (3) The 'adaptive refractor' can compensate some non-uniform conditions of the refractive coefficients of the material. (4) The 'adaptive refractor' is relatively simple in design and manufacturing, and low in product cost, especially for large-aperture precision lenses. As long as the step increment ($\Delta$x, $\Delta$y) of the 'adaptive point' is small and close to zero.

The technical features of the embodiment 4 are that an input (representative) line at each position is the light with its own specific slight inclination angle, the set parameters are as follows: an output line is required to be a parallel line or to reach a point, and is used for laser correction to obtain a nearly-ideal parallel line, or is further used for focusing to obtain a spot close to the ideal point.

**Embodiment 5**

Embodiment 5 is an 'adaptive mirror' for beam conversion designed and manufactured according to the concept of the present disclosure, two or one 'adaptive refractor' is configured to complete the nearly-ideal expansion or shrinkage of the laser beam.

The two types of 'adaptive curved surface' refractors obtained by using the design and manufacturing method of the present disclosure are as shown in FIG. 17 or FIG. 18, respectively.

The effect analysis of the 'adaptive curved surface' reflector or refractor is also as shown in FIG. 17 or FIG. 18, respectively.

The acquisition of the two-mirror type design and the 'adaptive curve' is as follows: the known parameter of an incident mirror 2701 is that an input (representative) line at each position is the light with its own specific slight inclination angle, and the set parameter is that an output line is required to be a divergent line (the light beam shrinkage is a convergent line, the same below), each angle of the divergent line is that the central line is 0° (parallel to the x axis), the inclination angles of the other divergent lines increase gradually (which gradually decrease when the light beam is shrunk, the same below), the extended lines of all divergent lines are intersected at one point, the arc with this point as the center of circle is a reference line of another surface (rotary surface) of the incident mirror 2701, and the incident surface of the incident mirror 2701 is a corresponding 'adaptive curved surface', please referring to FIG. 17. The known parameter of an emergent mirror 2702 is that an input (representative) line at each position is a divergent light output by its own corresponding incident mirror 2701, the set parameter thereof is that an output line is required to be a parallel line, and thus the incident surface of the emergent mirror 2702 is an 'adaptive curved surface', the 'emergent surface' is a plane, please referring to FIG. 17.

The input line of one-mirror type (as shown in FIG. 18) is the same as the input line of the incident mirror 2701, the output lines are parallel lines, and the middle transition divergent line is the same as that of the two-mirror type. The two surfaces of the 'adaptive mirror' used for the beam expansion or shrinkage of the one-mirror type are corresponding 'adaptive curved surfaces'.

The 'adaptive curved surface' reflector or refractor may be used for the followings: 1, laser and microwave spatial communication as well as radars and sonars. 2. The laser beam of one mirror is expanded or shrunk, the small lens aperture can be used for fiber optic communication and other occasions (in the absence of correction problems, it can be used in both directions of variation, otherwise the lens making the beam change from large to small and the lens making the beam change from small to large are different in the design). 3. During large aperture, one mirror is used, which is too thick and consumes too much materials; two thin lenses may be used, one is to change the beam into one point or to diverge or converge the light uniformly, and the other is to change the light into uniform parallel light (the larger the aperture changes, the farther the distance between the two lenses), such as for the conditions of correcting the laser beam of the lithography machine in parallel or expanding the light beam.

The two types of products in the embodiment 5 have the following outstanding characteristics:

(1) The method for designing and calculating a beam conversion lens by using the present disclosure is simple and intuitive, which can complete the technical task with one lens, directly aims at the requirements, and has strong pertinence and good adaptability.

(2) The design calculation data of the embodiment may be directly programmed and input into the CNC machining tool for production. Moreover, the mirror grinding equipment and technology are close to the production of the spherical mirror, so that the precision lens may be produced with shorter time and lower economic cost, especially for the large precision lens.

(3) The product of the embodiment may achieve the nearly-ideal conversion of the light beam, as long as the step increment ($\Delta$x, $\Delta$y) of the 'adaptive point' is small and close to zero. Especially in the conversion process, the first conversion may be rough (i.e., the step increment ($\Delta$x, $\Delta$y) should not be too small, thus the cost of some products can be reduced), and the second conversion refers to perform total correction, and finally, the precise effect can still be obtained. (The technical measures can be used in other similar situations of the present disclosure)

The technical features of the embodiment 5 are the design parameters of the surface structural shape thereof, an input (representative) line at each position is the light with its own specific slight inclination angle, the set parameters thereof are as follows: an output line is required to be a parallel line, and an extended line of the middle transition light (line) is required to intersect at one point. The 'adaptive mirror' product is used for the conversion of the light beam (e.g., the extension or shrinkage of the laser beam), especially that one lens can complete the technical task.

**Embodiment 6**

Embodiment 6 is an 'adaptive mirror' which is designed and manufactured according to the concept of the present disclosure and makes the lithographic mask image almost ideally. It has two forms: a refractor and a reflector, and can be used in a lithography machine and other scenes.

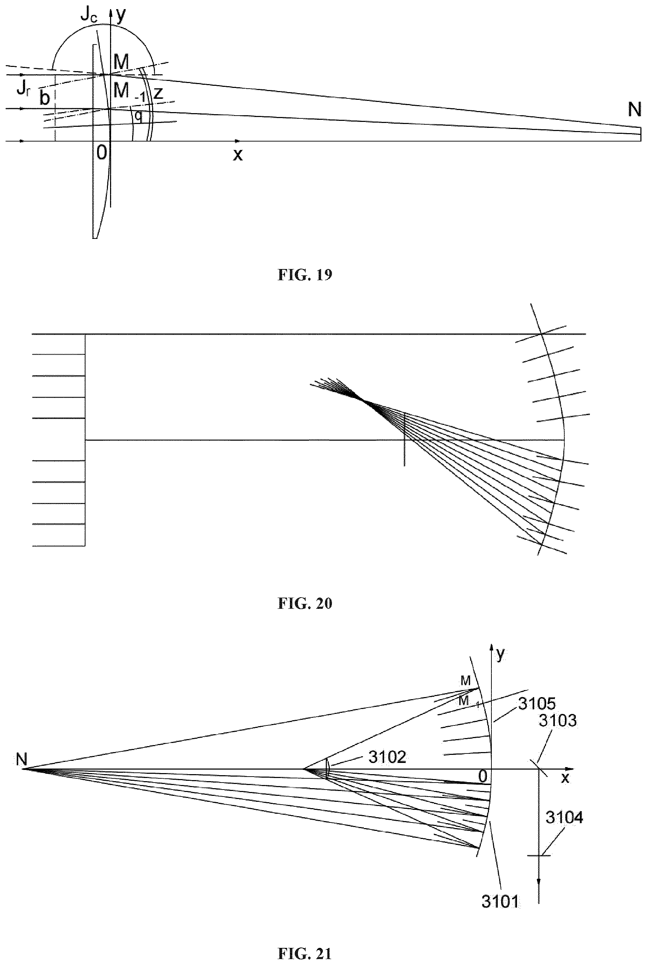

The 'adaptive curved surface' refractor obtained using the design and manufacturing method of the present disclosure is as follows: the design and manufacturing are conducted according to the method provided by the summary of the present disclosure; the 'adaptive curved surface' reflector obtained using the design and manufacturing method of the present disclosure is as follows: the design and manufacturing are conducted according to the method provided by the summary of the present disclosure, as shown in FIG. 19 and FIG. 20. The design parameters of the surface structural shapes thereof are as follows: it is known that the input (light) line is a parallel line (or is slightly diverged and converged light clear in occupation, such as a laser beam), and the output (light) line accurately reaches the specified point and performs imaging. The use scenes of the adaptive curved surface refractor and reflector are as shown in FIG. 19 and FIG. 20.

The application process is as follows: 1. the 'adaptive' refractor is used to correct the laser beam, or expand the light beam at the same time to make the beam irradiate the lithographic mask; the laser correction procedure may also be omitted, but at this time, it is necessary to design the 'adaptive curve' refractor for reflector according to the incident light for direct imaging (the 'adaptive curve' refractor or reflector is naturally manufactured by using the design and manufacturing method of the present disclosure, and the difference is only the known parameter of the inclination angle of the incident light). 2. The light beam after lithographic mask is illuminated and an 'adaptive' refractor is used for imaging for performing lithography; tens of nanometers of silicon (carbon) integrated circuit semi-finished products are manufactured; or the liquid infiltration technology is used to produce more precise silicon (carbon) integrated circuit semi-finished products; or tens of nanometers of glass substrate metal sheet image mold for lithography may also be manufactured. 3. On the basis of manufacturing tens of nanometers of the glass substrate metal sheet image mold for lithography, the ultraviolet waveband (or add liquid infiltration process), or 0.1 nanoscale X-ray band, can be used to irradiate the glass substrate metal sheet image mold, and then the 'adaptive reflector' is used for imaging to manufacture 1- to 2-nanometer silicon (carbon) integrated circuit semi-finished products.

The effect analysis of the 'adaptive curved surface' refractor is as follows: the analysis is mainly developed around the imaging accuracy, as the design data that the light passing through the 'adaptive point' is refracted to the workpiece is straightforward, (for the rotary refractor, the non-uniform refractive index of the refracting material scattered from the center to the circumference can be corrected). Theoretically, there is no error, and the error analysis mainly focuses on the part between the adjacent 'adaptive points'. Certainly, if the adjacent 'adaptive points' are very close, the error must be very small, but the manufacturing may be very difficult. Therefore, the distance between the adjacent 'adaptive points' needs to be controlled to make the maximum error between the two points not exceed the error required by the design. Such analysis is applicable to all types of 'adaptive mirrors'.

The 'adaptive curved surface' refractor has the following outstanding characteristics: 1. Compared with the spherical mirror, the chromatic aberration problem is well solved, the imaging is clear, and the accuracy is greatly improved. 2. Compared with the aspheric mirror in the prior art, the design is simple, the effects such as accuracy may be directly seen, and the manufacturing is easy. 3. For example: for the m (meter) level figure, it is reduced to mm (millimeter) level. If the distance between the 'adaptive points' on the 'adaptive curve' mirror is 1 mm, the imaging accuracy can reach several nm (nanometer) level. 4. In a case of using a reflector form, it is easy to find the material with a wide wavelength range and adapting to the light, such as stainless steel, which can reflect from far infrared light to ultra-ultraviolet light to X-ray. Such an 'adaptive mirror' also has no chromatic aberration problem (of course, for the monochromatic light of laser, the refractor also has no chromatic aberration problem).

The nearly ideal characteristics of 'adaption' are started from design, the nearly ideal effect of the adaption appears in the 'adaptive curve' (product), and is fully reflected, this is the 'adaption' conception.

The technical features of the embodiment 6 are the design parameters of the surface structural shapes thereof: it is known that the input (light) line is a parallel (or a slightly diverged and converged light clear in occupation, such as a laser beam), the output (light) line accurately reaches the specified point and performs imaging, and the product can be used for fine lithography.

**Embodiment 7**

Application of the adaptive curved surface refractor designed and manufactured according to the concept of the present disclosure to the ideal imaging of 'point light' may be used for telescopes, microscopes, cameras, and video cameras.

(1) a reflecting telescope, which is designed with extremely long focal length (e.g., 100 km, 10,000 km), is an application of the 'point light' for nearly ideal imaging. As the 'adaptive mirror' is designed to directly concentrate all the incident light on the center of the image for the center point, it is used for the telescope. For the small central region of an extremely distant target, the effective aperture may be very large, the image is clear, and the resolution is very high. The telescope may receive weaker signals and may be used under the conditions of less light.

(2) a cell phone camera, for long focal length lens, has the same aperture and greatly improved pixel. One is a high-definition lens (a lens can also be added for compensating the chromatic aberration) with particularly small spacing for imaging (e.g., for mobile phone cameras, which can produce a periscope-type single lens with a rotation angle of 90° to obtain a long focal length and optical zoom, thus facilitating the installation of the cell phone). In addition, the adaptive mirror for extremely-accurate focusing and imaging of the fixed point can be made into a single lens, which has no limit on the effective aperture. The point may be very close or very far according to the design requirements. To this end, the 'adaptive mirror' with a large effective aperture can be easily manufactured to observe and record an extremely distant target with extremely weak signal, a point of the celestial body and its surrounding points at a high resolution. The 'adaptive mirror ' may be a refractor or a reflector. The effective aperture of the 'adaptive mirror ' may be greater than that of the lens in the prior art, thus receiving weaker signals, and being used under the conditions of less light.

The design and use effects of an objective lens of the reflecting telescope are as shown in FIG. 21.

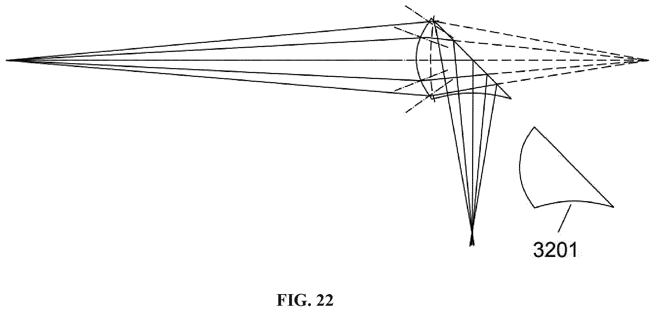

The design and use effects of a lens of the cell phone camera are as shown in FIG. 22.

The 'adaptive curved surface' reflector has the following outstanding characteristics: when the 'adaptive curved surface' reflector is used for the telescopes, for the small region in the center of an extremely distant target, the effective aperture may be very large, the image is clear, and the resolution is very high, and therefore the telescope may receive weaker signals and may be used under the conditions of less light.

The 'adaptive curved surface' refractor has the following outstanding characteristics: when the 'adaptive curved surface' refractor is used for a long focal length lens of the cell phone camera, for the small region in the center of a distant target, the image is clear, the resolution is high, and one mirror may achieve the functions of 'long focal length' and 'periscope'. Therefore, the cell phone camera may receive weaker signals and may be used under the conditions of less light.

The technical features of the embodiment 7 are design parameters of surface structural shapes thereof: it is known that the input (light) line is emitted from one light-emitting point, a plurality of representative light of the light-emitting point can be set to be a plurality radiant light, the output (light) line may be accurately converged to another set point, and the 'adaptive mirror' is used for high-definition telescope and the cell phone camera.

**Embodiment 8**

The embodiment 8 is an 'adaptive curved surface' reflector or refractor designed and manufactured according to the concept of the present disclosure, the 'point light' is re-converged into 'point light' at a particular position or processed as a particular 'spot'. There are the following adaptive mirrors belonging to this situation:

(1) A gradual multi-focal glasses product which is thinner.

(2) An anti-glare high beams for vehicle and ships which are achieved using an LED light source, and are more power-saving.

(3) A receiving surface mirror with a certain viewing angle width capable of giving consideration to both wide and sharp signal reception.

The adaptive mirror is easily achieved by using the design and manufacturing method provided by the present disclosure.

**Claims**

**1.** A reflector, refractor and a combination apparatus for converging, imaging, correcting, diverging and compensating, wherein a structural shape of a reflecting surface of the reflector and an outline structural shape of at least one surface of the refractor are obtained by translating following curves or rotating the following curves around a central axis; numerous points on the curves and normal lines corresponding to the points are determined by a mathematical equation set (1) and a formula (1), a formula (2), a formula (3), a formula (4), a formula (5), and an equation (1), point coordinates and normal lines of referred curves are able to be determined point by point progressively according to rules of optical geometry and according to input and output conditions, and subsequent drawing requirements are satisfied; two adjacent points are connected by an arc with an intersection of normal lines of two adjacent points as a center; a smooth curve obtained gathering these arcs is a solved curve; referred combination apparatus has at least one of the reflectors or refractors; technology and products are used in fields of solar photothermal and photovoltaic, optical (such as telescope, camera, lighting, etc.) or acoustic (microphones, loudspeakers, etc.) devices, instruments (range finders, etc.), equipment (lithography machines, cutters, etc.), radars, sonars, the fields of laser and microwave, medical X-rays, ultrasound equipment and nuclear (experiment) test instruments and equipment to improve cost performance of existing products or to obtain the product not in prior art.

2. The 'adaptive mirror' and apparatus according to claim 1, wherein an input line for design of an 'adaptive curve' is sunlight or a reflection line, an output line is a tangent of an excircle of a 'heat collector', and the 'heat collector' is 'multi-tube' heat collector or a 'separated' heat collector, a comparative concentration ratio of a compound 'adaptive mirror' is increased by 41%, and a temperature of a working medium is improved by a heat collector structure.

3. The 'adaptive mirror' and apparatus according to claim 1, wherein an input line for the design is sunlight, an output line is a connecting line from a reflection point to a specific point on a solar cell panel, and during drawing, an illumination compensation intensity is determined by a distance between a front input line and a rear input line, and an 'adaptive reflector' for compensation is 'convex'.

4. A mobile solar power supply and charging facility for an electric vehicle constructed according to claim 2 or 3, wherein a solar photovoltaic power generation facility is installed above a road, a solar photothermal power generation facility is installed along roadside; the facility for powering and charging a traveling vehicle is powered by direct current or alternating current, and power is transmitted to a first contact slide rail (2401) and a second contact slide rail (2411); a line (rail) on a side easy to expose is grounded, and a support (2409) for bearing the contact slide rail and a non-ground rail (line) are well insulated; a (switching) 'collector' trolley (2408) provided with a (traveling) 'collector' wheel (2402) and a collector shoe (2403) of the facility travels on the first contact slide rail (2401) and the second contact slide rail (2411); and an electromechanical connecting arm (2404) capable of automatically retracting, keeping electrical and mechanical connection with a charging vehicle and provided with an electromagnetic force mechanism is arranged below a middle of the trolley (2408); mechanical connection between the electromechanical connecting arm (2404) and the trolley (2408) is achieved using a universal joint (2406); the electromechanical connecting arm (2404) is provided with a retraction spring mechanism, a recovery wheel rope winder (2405) with a clockwork spring, and an interface (2302) for power supply and charging; rail lines are arranged above both sides of the road; a point of force at which the trolley is pulled is at a center below the trolley, four wheels at a front and rear of the trolley are able to turn left and right, with rotation angles limited to 15° and below with a limiting mechanism; a contact rail is in corresponding fit with the wheels at a bend, lower portions of the wheels incline outwards 5° to 25°, and the rail inclines correspondingly; and a mechanical and electrical interface (2303) with electromagnetic force control and with a protection apparatus is installed at a tail part of a powered and charged vehicle; and therefore, the mobile solar power supply and charging facility for the electric automobile is completed stably.

5. The 'adaptive' refractor according to claim 1, wherein design parameters of surface structural shape thereof are as follows: an input (representative) line at each position is light with respective specific slight inclination angle, set parameters are as follows: an output line is required to be a parallel line or to reach a point, and is used for laser correction to obtain a near-ideal parallel line, or is further used for focusing to obtain a spot close to an ideal point.

6. The 'adaptive mirror' product according to claim 1, wherein design parameters of surface structural shape thereof are as follows: an input (representative) line at each position is light with respective specific slight inclination angle, set parameters thereof are as follows: an output line is required to be a parallel line, an extended line of a middle transition light (line) is required to be intersected with an output line at one point; the 'adaptive mirror' product is used for conversion of a light beam (e.g., the extension or shrinkage of the laser beam), especially that one lens can complete the technical task.

7. The 'adaptive mirror' product according to claim 1, wherein design parameters of surface structural shape thereof are as follows: an input (light) line is known as a parallel line (or a slightly diverged and converged light clear in occupation, such as a laser beam), an output (light) line accurately reaches a specified point and performs imaging, and the product is used for fine lithography.

8. The 'adaptive mirror' product according to claim 1, wherein design parameters of surface structural shape thereof are as follows: an input (light) line is known to be emitted from one point, a plurality of representative light of a light-emitting point is set as a plurality radiant light, and an output (light) line is accurately converged to another set point; and the 'adaptive mirror' is used for a high-definition telescope or a cell phone camera.

9. A design and manufacturing method of a converging, imaging, correcting, diverging and compensating reflector (or mold thereof) or refractor (or mold thereof), wherein a used design method is as follows: relevant technical structural shape parameters of curves used by the reflector or refractor are obtained in such a way; numerous points on the curves and a normal line of a certain point are determined by a mathematical equation set (1) and a formula (1), a formula (2), a formula (3), a formula (4), a formula (5), and an equation (1); point coordinates and normal lines of a referred curve are able to be determined point by point progressively according to rules of optical geometry and according to input and output conditions, and subsequent drawing requirements are satisfied; two adjacent points are connected by an arc with intersection of normal lines of two adjacent points as a center; a smooth curve obtained gathering these arcs is a solved curve; the solved curve is translated to obtain a groove-shaped curved surface (convex or concave), or the solved curve is rotated with a central axis as a center to obtain a dish-shaped curved surface (concave or convex); known (input representative line) parameters and set (output representative line) parameters have strong pertinence to application, and the solved curve (surface) is completely designed for the application and is accurate; the used manufacturing method is as follows: a workpiece on a machine tool rotates around respective central axis, and a cutter (grinding head) also rotates around respective central axis, and the cutter (grinding head) swings forward at a same time; when a center of swing moves to a next point according to a grinding point, a center of swing turns to a center of a connecting arc of the point and respective next point and continues to swing to a last point of such processing, and the processing is completed; and if possible, the processing is started from a connecting arc with a largest radius.

**FIG. 1**

**FIG.2**

start a drawing process to establish a plane right-angle coordinate system?

1301

Drawing an origin normal line in a case of line to point (according to input and output lines)?

**Line to line branch (1301 right):**
- Draw an origin normal line in a case of line to line (according to input and output lines)
- Draw the normal line of the intersection of the next input line and the input line
- Drawn an angular bisector of adjacent normal lines?
- Produce an intersection between the angular bisector and the input line, where the intersection is the adaptive point
- Whether the drawing of the adaptive point is finished or not? — No (loop back); Yes → End the first stage process?

**Point to line branch:**
- Draw an origin normal line in a case of point to line (according to input and output lines)
- Set an input line, and draw the normal line of the intersection of the input line and the output line
- Draw an angular bisector of adjacent normal lines
- Produce an intersection between the angular bisector and the input line, where the intersection is the adaptive point
- Whether the drawing of the adaptive point is finished or not? — No; Yes → End the first stage process

**Line to point branch:**
- Draw an origin normal line in a case of line to point (according to input and output lines)
- Estimate an input line, and draw the normal line of the intersection of the input line and the output line
- Draw an angular bisector of adjacent normal lines
- Produce an intersection between the angular bisector and the input line
- Whether the difference between an inclination angle of the currently drawn intersection normal line and an inclination angle of the previously drawn intersection normal line is less than the setting? — No; Yes

Whether the drawing of the adaptive point is finished or not? — No; Yes → End the first stage process

Use general processes in FIG.3 for the second stage drawing process, where the processes are the same

1302

- Draw an original normal line in a case of point to point (according to input and output lines)
- Set an input line, estimate an output line, and draw the intersection normal line
- Draw an angular bisector of adjacent normal lines
- Produce an intersection between the angular bisector and the input line and draw the normal line of the intersection
- Whether the difference between an inclination angle of the currently drawn intersection normal line and an inclination angle of the previously drawn intersection normal line is less than the setting? — No; Yes

Whether the drawing of the adaptive point is finished or not? — No; Yes → End the first stage process

General drawing process in the second stage connect two points with an arc with the normal line intersection of adjacent adaptive points as the center, where the set of these arcs is a corresponding adaptive curve, and the drawn adaptive curve is a smooth curve.

**FIG. 3**

22

1402

1403

1407

1404

1401

1406

1405

**FIG. 4**

1506

1505

1501

1503

1504

1502

**FIG. 5**

1602

1611

1610

1605

1607

1609

1606

1608

1603

1604

1601

**FIG. 6**

M

$J_r$

$J_c$

$M_{-1}$

z

q

x

1701

1702

N

0

**FIG. 7**

1802

1801

**FIG. 8**

1906

1902

1901

1904

1903

1907

1905

**FIG. 9**

**FIG. 10**

**FIG. 11**

**FIG. 12**

**FIG. 13**

**FIG.14**

**FIG. 15**

**FIG. 16**

**FIG. 17**

**FIG. 18**

**FIG. 19**

**FIG. 20**

**FIG. 21**

3201

FIG. 22